# EUROPEAN PATENT APPLICATION

(11) **EP 4 807 609 A1**
(43) Date of publication of application: **16.09.2026**
(21) Application number: 25305327.6
(22) Date of filing: 12.03.2025
(51) Int. Cl.: G06F 30/17, G06F 30/27, G06F 111/04

(54) **MACHINE-LEARNING A FUNCTION CONFIGURED TO PREDICT CONSTRAINTS FOR A 2D SKETCH REPRESENTING AT LEAST A PORTION OF A MECHANICAL PART**

(71) Applicant: Dassault Systèmes, 78140 Vélizy-Villacoublay (FR)
(72) Inventor: LERONDEAU, Theodore, 78140 Vélizy-Villacoublay (FR); HEBRARD, Pascal, 78140 Vélizy-Villacoublay (FR); CAILLAUD, Fabrice, 78140 Vélizy-Villacoublay (FR); ZHANG, Zhenchen, 78140 Vélizy-Villacoublay (FR); JENNEQUIN, Delphine, 78140 Vélizy-Villacoublay (FR)
(74) Representative: Bandpay & Greuter

(57) **Abstract**

The disclosure concerns a method for machine-learning a function configured constraints prediction for a sketch representing at least a portion of a mechanical part. The method comprises providing a training dataset of training examples, each comprising a graph representing a sketch. The graph comprises object nodes each representing a geometric object, geometry nodes each representing a geometric property, topological edges each representing a topological link, geometrical edges each connecting a geometry node to one object node, and constraint edges each representing a constraint and labeled with a label of a predefined set of labels each representing a constraint of a predefined constraints set. The method comprises training the function to take as input a graph representing a sketch and to output constraints each of a constraint edge of the graph and each belonging to the predefined constraints set.

## Description

### TECHNICAL FIELD

The disclosure relates to the field of computer programs and systems, and more specifically to methods, systems, programs and a function for predicting constraints for a 2D sketch representing at least a portion of a mechanical part.

### BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Within this context, the mechanical designer, in the process of elaborating a computer model of a manufacturable mechanical part, may need to create/edit/design 2D profiles, also referred to as 2D sketches. Software solutions exist for that purpose and may be referred to as "Sketcher Applications". During that sketching process, the designer typically needs to assign a set of constraints in order to fix the 2D geometry in space and also create constraint parameters that can be easily changed afterwards. Assigning constraints when creating a sketch is a regular and tedious task for designers and typically requires knowledge and/or best practices to avoid under/over constrained sketches. In existing solutions, the user manually assigns each constraint for a given sketch, which is normally complex and time consuming. Numerous human-machine interactions, typically clicks, touches, drag- and-drops, are required. Some software solutions now include an algorithmic self-constraint system that automatically constrains the system mathematically until an iso-constrained sketch is obtained. However, this does not give a natural parameterization (which would be done by a technical expert based on know-how). And this natural parameterization can be different depending on the context (type of part for example).

In other words, nowadays, one needs either to have the sketch parameterized by an expert (which takes time and requires know-how), or use algorithmic self-constraint, which is often technically unsatisfactory and thereby may require corrections by the user.

When designing a 2D sketch, mechanical designers aim at obtaining an iso-constrained sketch, i.e. a 2D sketch where there is 0 degree of freedom remaining and which is not over defined. For a given mechanical part, there may be several, possibly numerous, solutions that respect this definition. In other words, there are several ways of making an iso-constrained sketch. FIG.s 1 to 6 show six different possible examples of iso-constraint sketches to represent the same mechanical part. It is however generally accepted that, in the context of design exploration, an iso-constrained sketch should have its dimensions defined to enable design update stability and robustness. In particular, mechanical designers aim at satisfying the following criteria:
- Sketch shape should remain valid on the largest domain during Design Exploration (robust design):
   ∘ Avoid invalid and singular configurations;
   ∘ Keep design intention and shape, minimize number of dimensions;
- The selected dimensions should have a meaning according to the engineering context (thickness of a part, functional dimensions, reference axes or geometries, chained or stacked constraints);
- The constraints pattern should be easily readable by a human (e.g. no overlapping characters or dimension symbols).

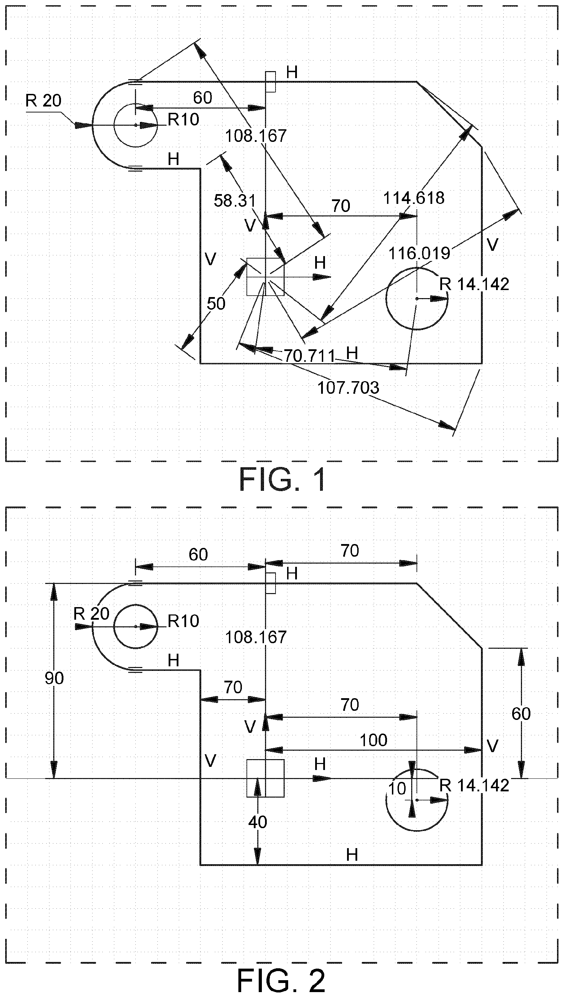

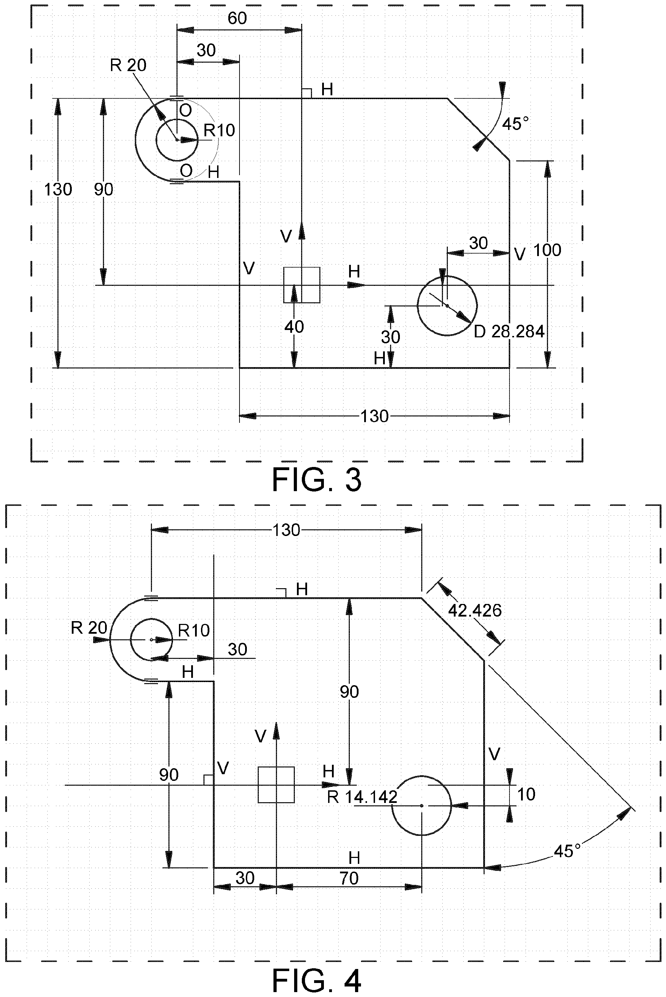

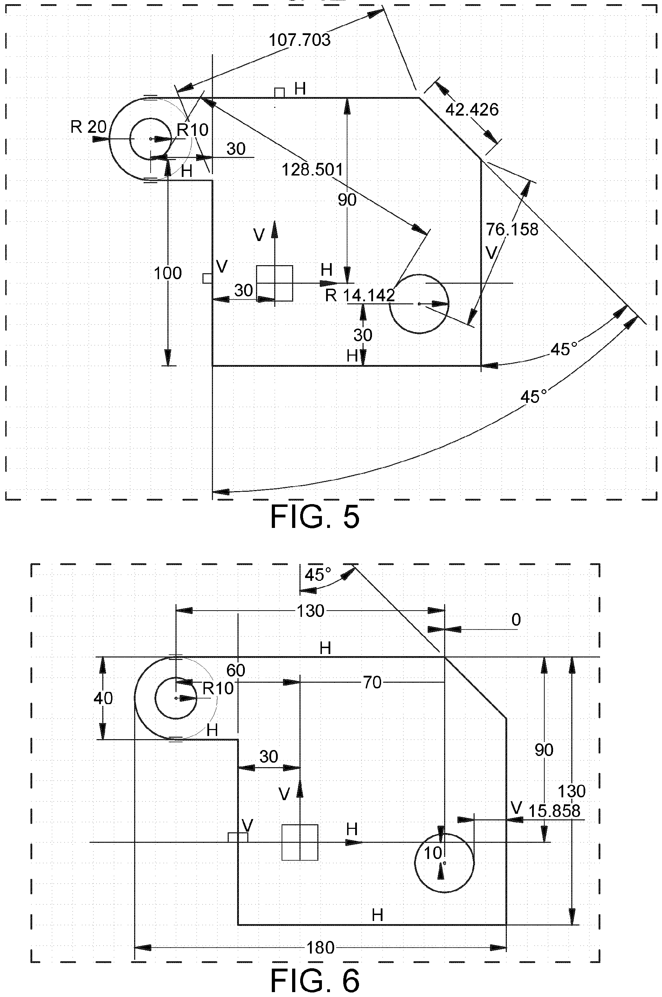

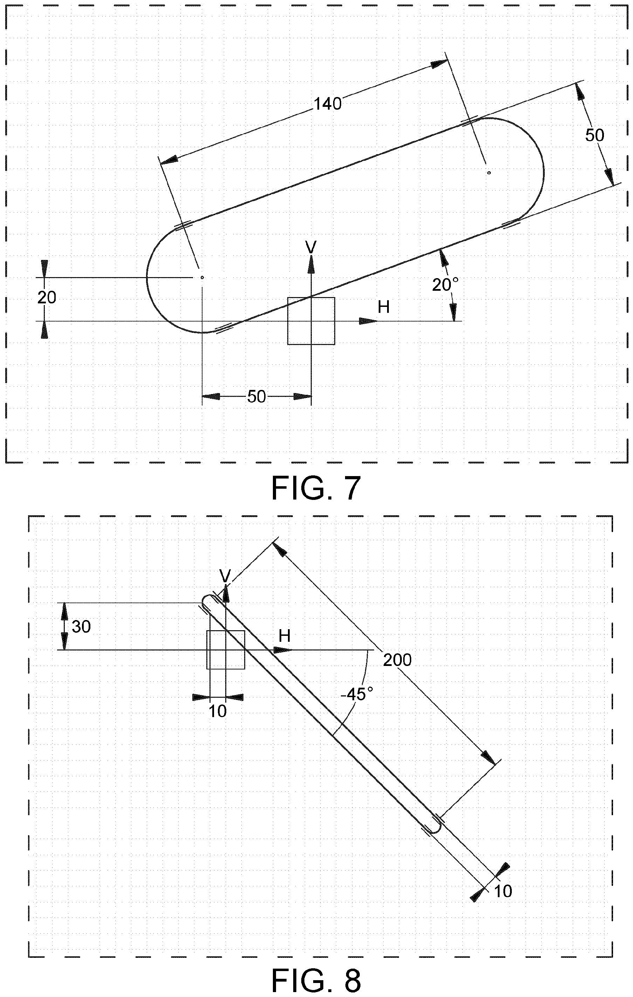

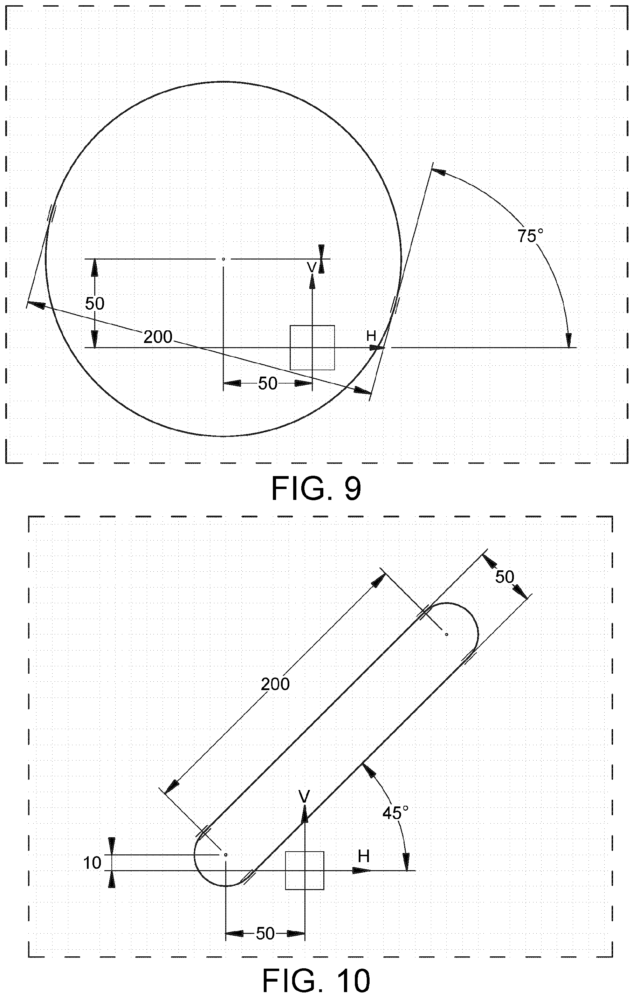

FIG. 7 shows an example of a robust iso-constrained design, with FIG.s 8 to 10 showing three updates of this design (obtained with varying dimensions of the design). It can be seen in the figures that shapes are valid on all domains: Distance ranges are in [0, +∞[ and angle ranges in ] - ∞, +∞[.

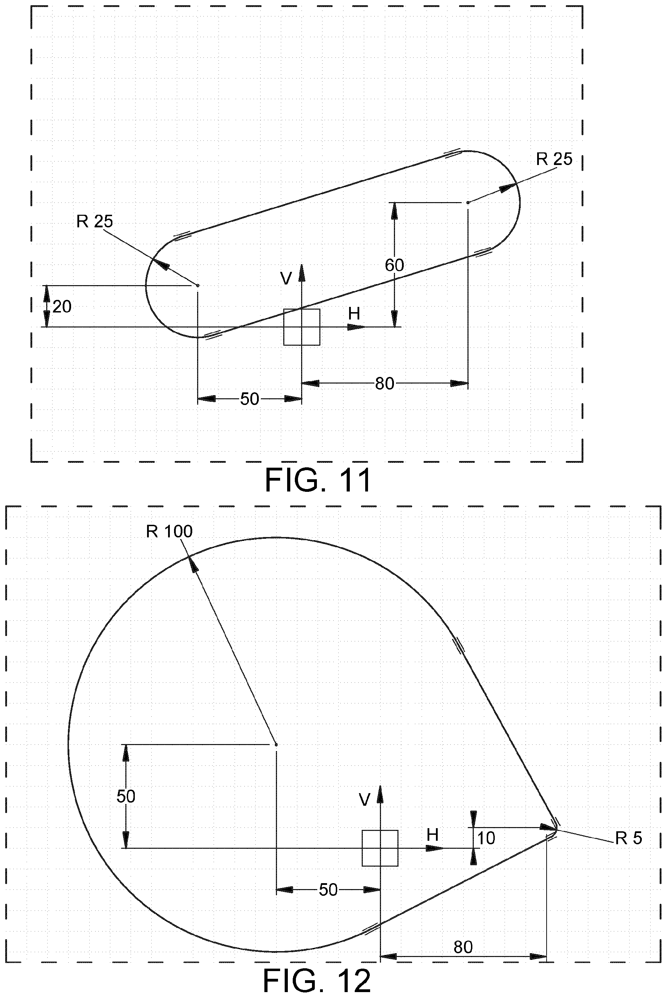

FIG. 11 shows an example of a weak iso-constrained design, as illustrated by FIG.s 12-13 which show unsatisfactory design updates of the design: the solution found does not cover the entire domain. For example, if one circle is inside the other. Furthermore, the original shape is not kept.

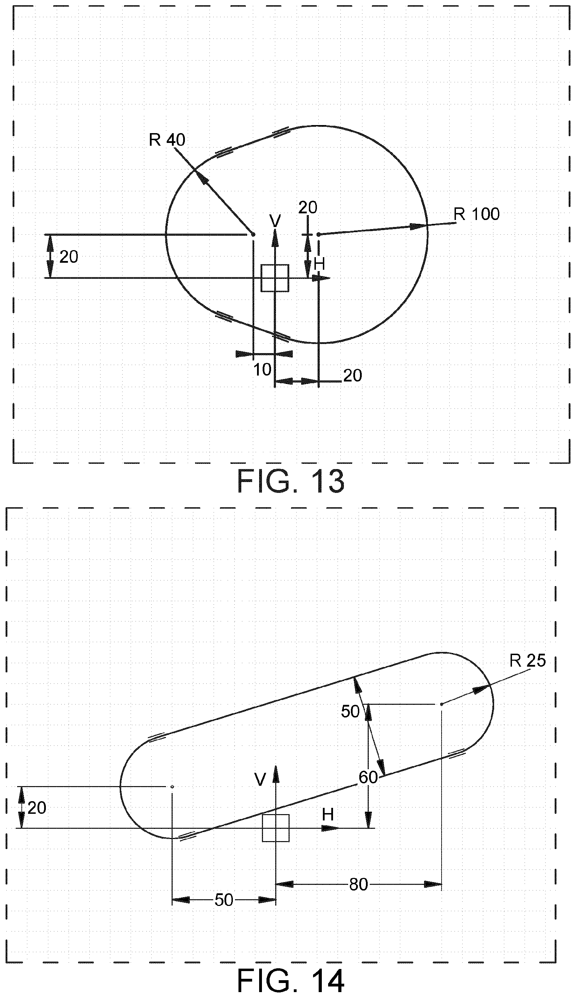

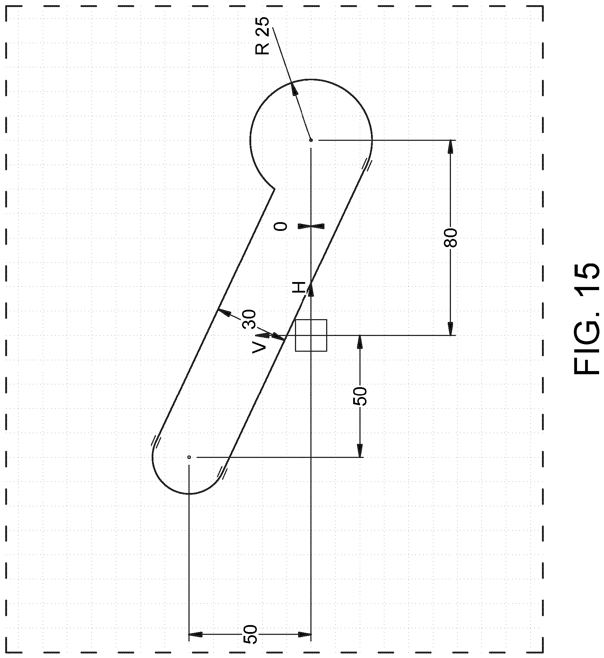

FIG. 14 shows yet another weak iso-constrained design, which does not allow preservation of the original shape, as can be seen in the design update shown on FIG. 15.

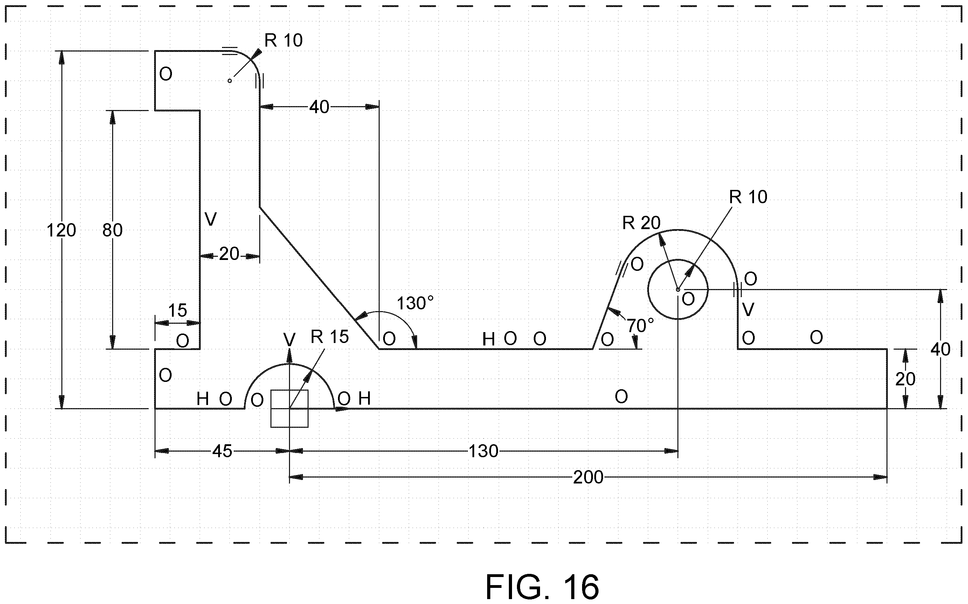

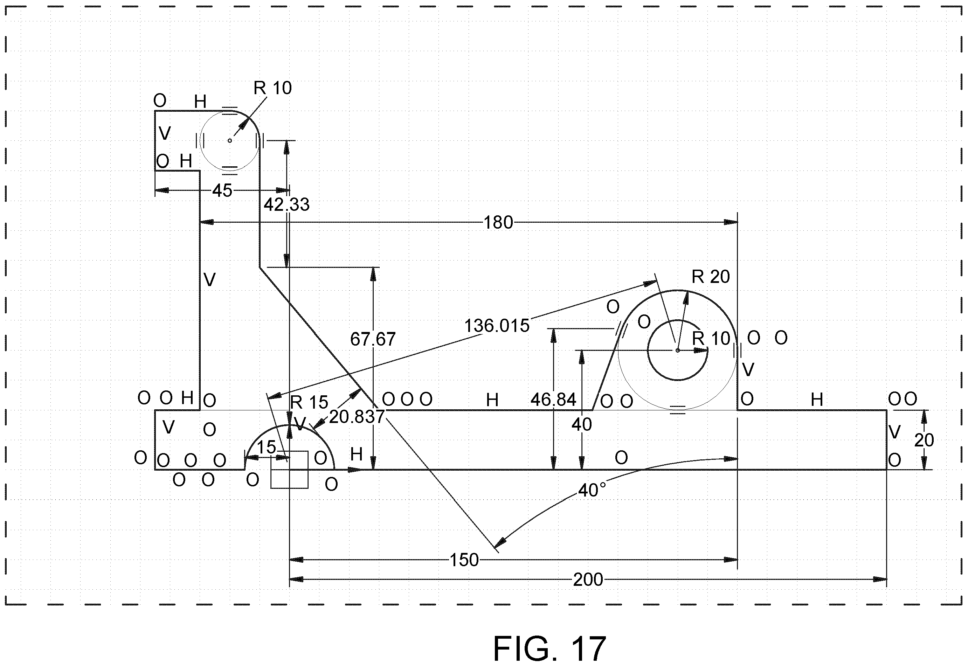

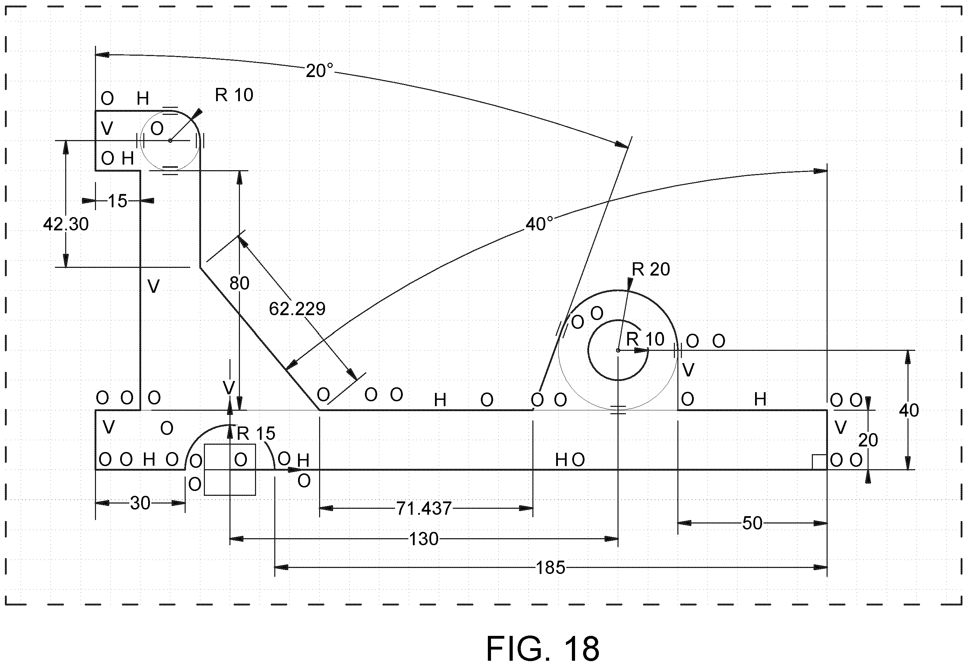

FIG. 16 shows an example of a readable iso-constrained sketch. FIG. 17 and FIG. 18 show examples of iso-constrained sketches considered non-readable, or at least non-satisfactory from the viewpoint of readability (because there are too many written constraints and/or overlapping constraints).

Within this context, there is thus a need for improved solutions for finding constraints for a 2D sketch representing at least a portion of a mechanical part.

### SUMMARY

It is therefore provided a computer-implemented method for machine-learning a function. The function is configured to predict constraints for a 2D sketch. The 2D sketch represents at least a portion of a mechanical part. The method comprises providing a training dataset of training examples. Each training example comprises a graph. The graph represents a 2D sketch representing at least a portion of a mechanical part. The graph comprises object nodes each representing a geometric object of the sketch. The graph also comprises geometry nodes each representing a geometric property. The graph also comprises topological edges each connecting two object nodes and representing a topological link between the objects represented by the two nodes. The graph also comprises geometrical edges each connecting a geometry node to one object node. Object nodes sharing the same geometric property (i.e. all object nodes sharing that property) are connected to a same geometry node which represents the geometric property (i.e. shared by the object nodes). The graph also comprises constraint edges each connecting two object nodes and representing a constraint between the objects represented by the two object nodes. Each constraint edge is labeled with a respective label of a predefined set of constraint labels. Each label of the set represents a respective constraint of a predefined set of constraints. The method further comprises training the function based on the training dataset. The function is trained to take as input a graph representing a 2D sketch representing at least a portion of a mechanical part and to output a set of constraints each of a constraint edge of the graph. Each constraint of the set belongs to the predefined set of constraints. The method may be referred to as "the learning method".

The method may comprise one or more of the following:
- each training example further comprises data specifying a set of couples of object nodes on which a constraint can be assigned;
- for each possible couple of object nodes of the graph of the training example, the couple is excluded from the set of couples if:
   ∘ the object nodes both represent a same point;
   ∘ the object nodes both represent a same line;
   ∘ the object nodes both represent an external object;
   ∘ the object nodes both represent a reference object;
   ∘ the object nodes represent fixed objects; or
   ∘ one object node represents a reference object and the other object node represent an external object;
- providing the training dataset comprises forming the training dataset, including:
   ∘ providing a set of 2D sketches, each representing at least a part of a respective mechanical part, to be represented by graphs forming training examples; and
   ∘ reducing the set of 2D sketches by only keeping sketches which respect one or more of the following criteria:
      ▪ the sketch is well-defined;
      ▪ the sketch is satisfied;
      ▪ the sketch comprises at least a predefined number of geometries;
      ▪ the sketch comprises manifold profiles only; and/or
      ▪ the sketch comprises at least one dimensional constraint;
- the forming the training dataset further comprises:
   ∘ converting each 2D sketch of the reduced set into a TEXT file;
   ∘ converting each TEXT file into a CSV file;
   ∘ converting each CSV file into a respective graph,
- the function includes a Graph Neural Network (GNN);
- the Graph Neural Network is a sequential Graph Neural Network including a first Graph Neural Network for prediction of logical constraints and a second Graph Neural Network for prediction dimensional constraints based on the output of the first Graph Neural Network;
- the predefined set of constraints includes:
   ∘ local constraints, consisting of: coincidence, parallelism, perpendicularity, and concentricity;
   ∘ dimensional constraints, consisting of: angle, distance, and radius; and
   ∘ negative constraint signifying the absence of constraints; and/or
- during, for at least some of the training samples, the method comprises setting the number of constraint edges corresponding to the negative constraint to being equal to about twice the number of constraint edges corresponding to the other constraints.

It is further provided a function learnable according to the learning method, i.e. a function having the architecture and parameters/weights with values identical as the values that would have been set by the training according to the learning method. The function may for example be the function learnt according to the method, i.e. the function that directly results from the training according to the learning method, i.e. having parameters/weights values directly set by this training.

It is further provided a computer-implemented method of use of the function. The method of use comprises providing a graph representing a 2D sketch representing at least a portion of a mechanical part. The graph comprises object nodes each representing a geometric object of the sketch. The graph also comprises geometry nodes each representing a geometric property. The graph also comprises topological edges each connecting two object nodes and representing a topological link between the objects represented by the two nodes. The graph also comprises geometrical edges each connecting a geometry node to one object node. The object nodes sharing the same geometric property are connected to the same geometry node, which represents the geometric property.. The method of use further comprises by applying the function, predicting constraint edges of the graph, thereby predicting a set of constraints for the 2D sketch, each constraint belonging to the predefined set of constraints.

The method of use may further comprise applying a post-processing to make the 2D sketch iso-constrained

It is further provided a computer program comprising instructions for performing the learning method and/or the method of use.

It is further provided a device comprising a data storage medium having recorded thereon the computer program and/or the function.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (*e.g*. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG.s 1 to 47 illustrate the methods; and

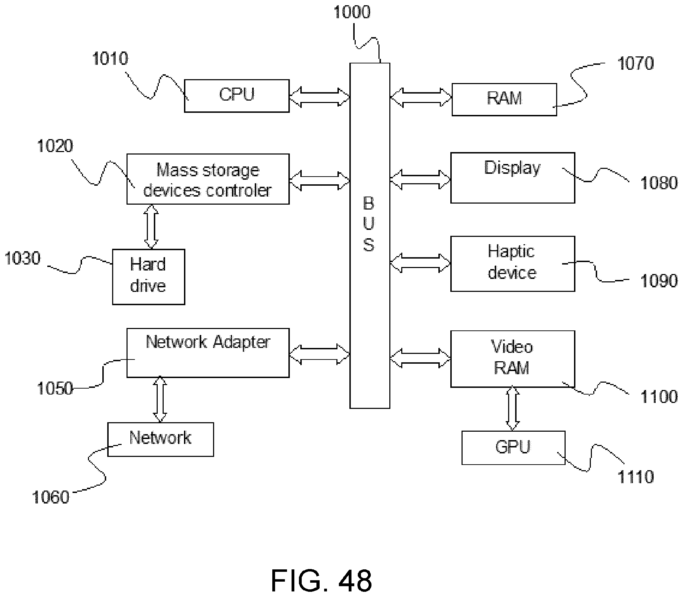

- FIG. 48 shows an example of the system.

### DETAILED DESCRIPTION

It is proposed a computer-implemented method for machine-learning a function. The function is configured to predict constraints for a 2D sketch. The 2D sketch represents at least a portion of a mechanical part. The method comprises providing a training dataset of training examples. Each training example comprises a graph. The graph represents a 2D sketch representing at least a portion of a mechanical part. The graph comprises object nodes each representing a geometric object of the sketch. The graph also comprises geometry nodes each representing a geometric property. The graph also comprises topological edges each connecting two object nodes and representing a topological link between the objects represented by the two nodes. The graph also comprises geometrical edges each connecting a geometry node to one object node. The object nodes sharing the same geometric property are connected to the same geometry node, and this same geometry node represents the geometric property. The graph also comprises constraint edges each connecting two object nodes and representing a constraint between the objects represented by the two object nodes. Each constraint edge is labeled with a respective label of a predefined set of constraint labels. Each label of the set represents a respective constraint of a predefined set of constraints. The method further comprises training the function based on the training dataset. The function is trained to take as input a graph representing a 2D sketch representing at least a portion of a mechanical part and to output a set of constraints each of a constraint edge of the graph. Each constraint of the set belongs to the predefined set of constraints. As previously discussed, the method may be referred to as "the learning method".

The learning method constitutes an improved solution for finding constraints for a 2D sketch representing at least a portion of a mechanical part.

Indeed, as previously discussed, finding such constraints in prior art solutions is mainly performed manually by the user. Although the user is in practice a technical expert (*i.e*. a mechanical designer), and thus objectively selects constraints which are objectively technically relevant, this task of finding the constraints was cumbersome and lacked ergonomics: it involved many user-machine interactions, like clicks, and eye focus to carefully position the constraints while ensuring readability of the 2D sketch. The proposed learning method solves these problems by learning a function that is trained to output a set of constraints for a 2D sketch (a graph representation thereof being for that inputted to the function). This function is trained on a training dataset based on existing 2D sketches, which allows to use for training well-defined and satisfied sketches having constraints which are technically correct and positioned to ensure readability. The function in other words learns from existing 2D sketches well-annotated with constraints, to therefore output objectively correct constraints predictions for any input 2D sketch on which the function is used, as well as providing an output that respects the criteria explained above for a sketch considered satisfactory (readability of the constrained sketch, well-defined and satisfied sketch, constraints respecting know-how rules).

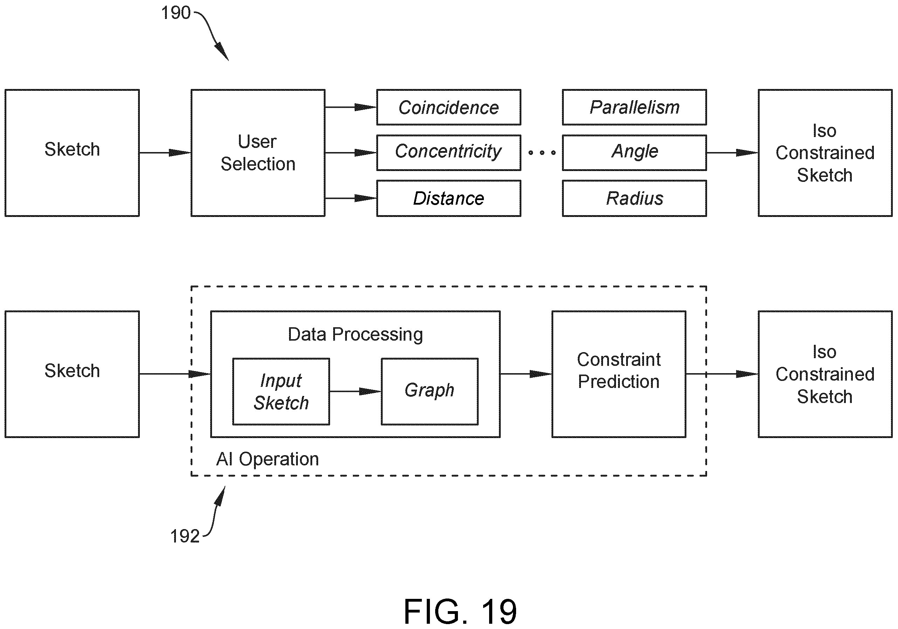

The proposed methods and function thus enable users to automatically assign constraints to a sketch, in a clear and logical way and using specific know-how. The trained function can suggest a pre-defined set of constraints and allow a user to gain productivity. The user may for example ask for a constraint suggestion on a sketch not constrained at all. It can inspire a user to know how to choose constraints and propose relevant options. The user may alternatively also start to manually constrain a sketch and therefore, initialize a constraint pattern. Then, the function can be used to complete the user specifications. This method may also be used to reduce user redundant constraint assignment tasks by finishing an initialized work. The proposed methods and function thus leverage from the power of generative Al to tremendously reduce the time of sketch constraint assignment and, therefore, improve user's design efficiency and obtain a sketch as it would be constrained manually by an expert user. This is illustrated on FIG. 19, which illustrates a comparison between the prior art workflow 190 and the workflow 192 allowed by the proposed methods and function.

The learning method is now further discussed.

The learning method is a method of machine-learning, for learning the function. As known *per se* from the field of machine-learning, the processing of an input by a model or function includes applying operations to the input, the operations being defined by data including weight values or parameters. Learning a model/function (*e.g.* a neural network or a regressor) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 1000, 10000, 100000, or 1000000. In the context of the present disclosure, by "learning a model/function based on a dataset", it is meant that the dataset is a learning/training dataset of the model/function, based on which the values of the weights/parameters are set. In the present disclosure, the training dataset is the dataset of training examples, on which the function is trained.

As known *per se* from machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce nonlinearity into the model. The output layer may have as many neurons as the variables in the output data. The interconnections between these layers define the topology of the neural network. The parameters of the neural network are the learnable weights and biases, which are determined in the training process. In contrast, the hyperparameters are pre-defined settings that are not learned from the training data. These encompasses the number of hidden layers, neurons per layer and much more. To train a neural network, at least two settings may be defined. First, a loss function, which is a metric that measures the error between the training data and the model's prediction, such as the mean square error (MSE). Second, an optimizer, which modifies the model's weights and biases during the training process to minimize the loss function. Each optimizer has its own set of hyperparameters.

The function is configured to predict constraints for a 2D sketch representing at least a portion of a mechanical part. In other words, for any given input 2D sketch, the function predicts a set of constraints, each belonging to a predefined set as discussed hereinafter, of the 2D sketch. The function does so more specifically by processing a graph representing the input sketch, as discussed hereinafter. The function may for example comprise a module that converts the input sketch into the graph representation, and then a neural-network architecture that processes the graph to predict the set of constraints.

Before discussing the training dataset and the training, the concept of 2D sketch is now further discussed. Any 2D sketch herein is a collection of points and lines, which may also be referred to as a collection of profiles, altogether forming a 2D geometry that represents a mechanical part or at least a part thereof. The 2D geometry may for example represent an outer boundary of a 2D mechanical part, or at least a part thereof, or the 2D boundary of a sectional view or side view of a 3D mechanical part, or at least a part thereof. This is what is meant in the present disclosure by "representing at least a portion of a mechanical part" for a 2D sketch. This 2D geometry is positioned on a 2D plane support (typically corresponding to the screen plane) and may be modified within this 2D plane support. The 2D sketch may in fact designate the data comprising specifications of this 2D geometry and the support, and how the 2D geometry is positioned on the support. The 2D sketch may further comprise constraints that constrain the geometry, either totally or partially (*e.g.* as for the sketches of the training dataset), or no constraint at all (*e.g.* for sketches taken as input by the function during use). The 2D sketch may also designate the 2D graphical representation that stems from execution of these data.

A constraint is herein a mathematical feature that constrain the dimension and/or positioning of one or more geometries in the 2D sketch. From a computer point of view, the constraint is data which, when executed, causes this constraint of the dimension and/or positioning of the one or more geometries to which the constraint applies. A constraint may be defined by its type (*e.g*. a distance constraints) and numerical specification(s) (*e.g.* the numerical value of the distance). The 2D graphical representation of the sketch may comprise graphical representations of the constraints, *e.g*. each representation of a constraint comprising a symbol indicating the type of the constraint, and, for a dimensional constraint, a numerical value specifying the dimension at stake. For example, a line dimension constraint may be represented by a double arrow extending along the line, with a number indicating the value of the length of the line. Any constraint in the present disclosure, in particular any constraint in the training dataset or predicted by the trained function belongs to a predefined set of constraints. This predefined set of constraint may include:
- logical constraints, consisting of: coincidence (constraint that aligns two points or a point with a curve), parallelism (constraint that keeps two lines parallel), perpendicularity (constraint that ensures that wo lines are at a 90 degree angle), and concentricity (constraint that enforces that circles or arcs share the same center or a point lies on a circle center);
- dimensional constraints, consisting of: angle (constraint that specifies an angle between two lines), distance (constraint that fixes a distance between two geometries), and radius (constraint that sets the radius of a circle or arc); and
- negative constraint signifying the absence of constraints.
As further discussed hereinafter, the predefined set of constraints is a predefined set of constraint types, *i.e*. it describes all the possible constraint types. For dimensional constraints however, the constraints are defined by type but also numerical values (values of angle, distance or radius).

The learning method comprises providing a training dataset, which consists of training examples.

Each training example comprises a graph. The graph represents a 2D sketch. The 2D sketch represents at least a portion of a mechanical part. The graph comprises nodes and edges. The nodes consist of object nodes and geometry nodes. The edges consist of topological edges, geometrical edges, and constrain edges.

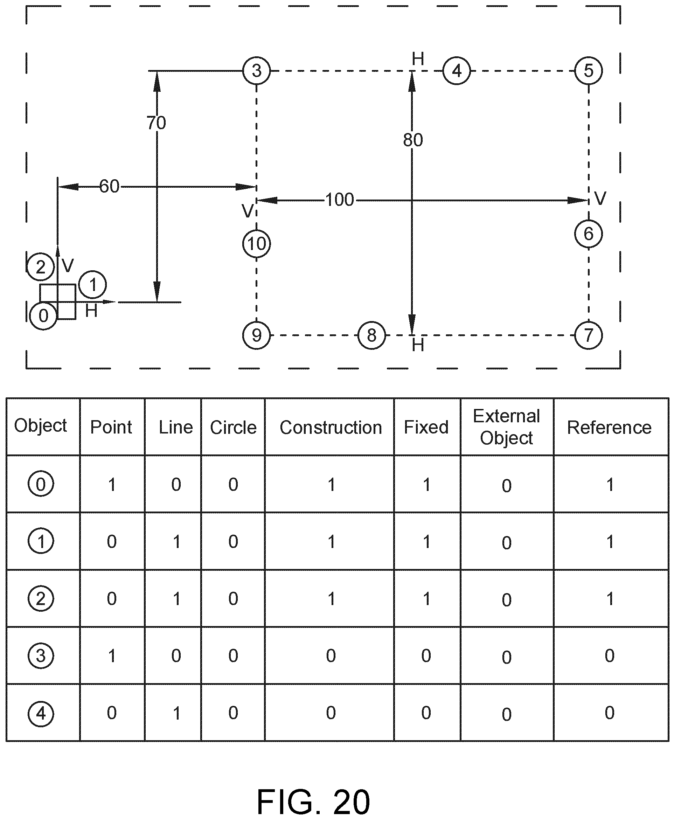

Each object node represents a geometric object of the sketch. In other words, each object node represents a geometry (*i.e.* geometry type), *e.g.* a line, a circle or a point, constitutive of the whole geometry of the sketch. The object node comprise data that specifies the type of geometry represented by the node. Each object node may for example comprise data specifying a vector having seven values, each value being equal to 0 or 1as follows:
- the first value indicates whether the object represented by the node is a point (1 if yes, 0 if no);
- the second value indicates whether the object represented by the node is a line (1 if yes, 0 if no);
- the third value indicates whether the object represented by the node is a circle (1 if yes, 0 if no);
- the fourth value indicates whether the object represented by the node is a construction object (1 if yes, 0 if no);
- the fifth value indicates whether the object represented by the node is an object fixed in space (1 if yes, 0 if no);
- the sixth value indicates whether the object represented by the node is an external reference from created 3D (1 if yes, 0 if no); and
- the seventh value indicates whether the object represented by the node is a reference object, *i.e.* an origin, the x axis or the y axis (1 if yes, 0 if no).
The method is of course not limited to the order of values described above, and any alternative order may be used. FIG. 20 illustrates the data associated with object nodes. As can be seen, several values may be non-zero (*e*.*g*. a point may be fixed and may be a reference object).

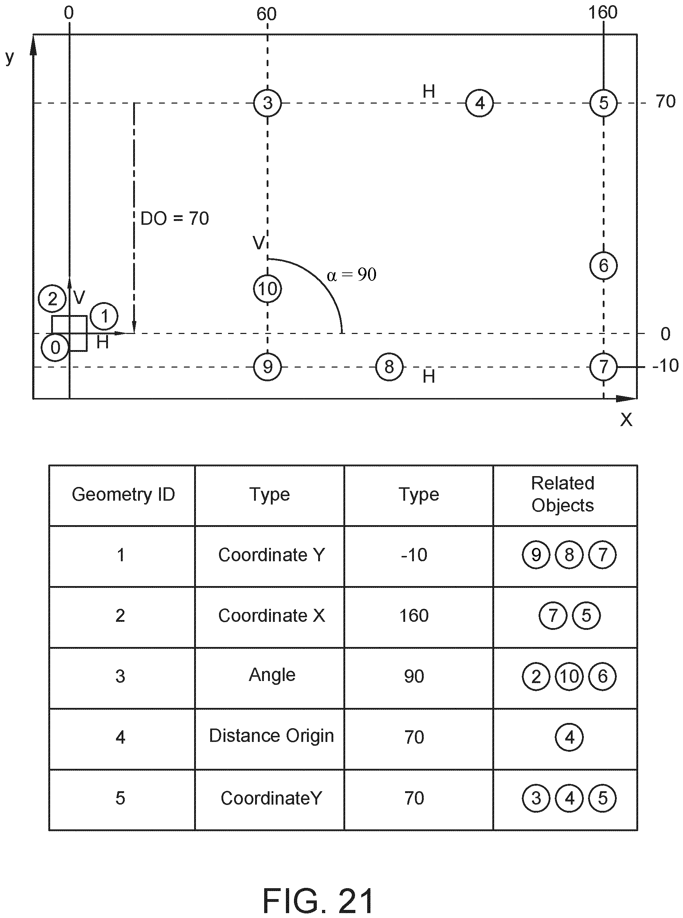

Each geometry node represents a geometric property. In other words, where each object node represents a geometric type of an object of the sketch (*e*.*g*. whether it is a point or a line or a circle), each geometry node represents a property of the geometry of an object (*e*.*g*. a radius value). However, a geometry node represents that property in absolute, *i.e.* the node itself only concerns the property and is independent of an object. However, the geometry node may be connected to an object node (by a geometrical edge, as discussed hereinafter), to specify that the geometric object represented by the object node has the property represented by the geometry node. The geometry node may comprise data that specifies the geometric property, for example data specifying five possible values: coordinate X, coordinate Y, angle, distance origin and radius. If the geometry node represents a coordinate X property, then the value of coordinate X has a specific value representing the property, and the other 4 values are set to zero. If the geometry node represents a coordinate Y property, then the value of coordinate Y has a specific value representing the property, and the other 4 values are set to zero. If the geometry node represents an angle property, then the value of "angle" has a specific value representing the property, and the other 4 values are set to zero. If the geometry node represents a distance to origin property, then the value of "distance origin" has a specific value representing the property, and the other 4 values are set to zero. If the geometry node represents a radius property, then the value of "radius" has a specific value representing the property, and the other 4 values are set to zero. For example, an object node representing a point is linked to two geometry nodes: one having a value associated with the "coordinate X" bit (and the other 4 values set to zero), and another having a value associated with the "coordinate Y" bit (and the other 4 values set to zero. This allows to represents the X and Y coordinates of the point as two geometry nodes. FIG. 21 illustrates the data associated with geometry nodes. As can be seen, several object nodes may be related to a same geometry node ("related objects" illustrates the geometric object related to the various geometry nodes in the examples for illustration, but it is not part of the data associated with the geometry nodes or object nodes. This type of link is specified by geometry edges).

Each topological edge connects two object nodes. The topological edge represents a topological link between the geometric objects represented by the two nodes. There is a topological edge between two object nodes if the two object nodes represent geometric objects which intersect each other/which are in contact with each other. For example, a point located on a line (*e.g*. an extremity of that line) has its object node connected to the object node of the line by a topological edge. The topological edge may comprise data specifying a reference (*e.g*. index or ID) to the two object nodes it connects.

Each geometrical edge connects a geometric node (containing the value of a specific geometric property as previously explained) to one object node. All the object nodes which share the same geometric property are connected to the same geometry node (*i.e*. each by a respective geometrical edge), and this same geometry node represents that same geometric property. In other words, each object node represents a geometric object but without representing/specifying a geometric property of that object. This property is represented by a distinct geometric node, and to represent the fact that the object has this property, there is a geometric edge between the geometric node and the object node. A geometric node may thus be linked to several object nodes which share the same geometrical property. For example, two points having the same X coordinate share the same geometrical node with two geometric edges. The geometrical edge may comprise data specifying a reference (e.g. index or ID) to the object node and the geometry node it connects.

Each constraint edge connects two object nodes and represents a constraint between the objects represented by the two object nodes. This constraint belongs to the predetermined set of constraints. The constraint edge is labeled with a respective label of a predefined set of constraint labels. Each label of the set represents a respective constraint of the predefined set of constraints, and thus the edge corresponding to a constraint is labeled with the label that corresponds to this constraint in the predefined set of constraints. The label may be a vector of N coordinates, with N being the number of constraint types (*i.e*. constraint types supported by the method) of the predefined set, each coordinate representing one constraint (*i.e*. constraint type) of the set, the coordinate being 1 if the constraint represented by the edge correspond to this one constraint of the set and being 0 otherwise. Besides data specifying this label, the constraint edge may comprise data specifying a reference (*e.g*. index or ID) to the object nodes it connects. It is to be understood that the constraint edge represents the existence of a constraint, and its label specifies which constraint type it is within the predefined set of constraints. However, the constraint edge does not specify the specifications/parameter values of the constraint. For a logical constraint this does not change anything: a logical constraint is fully defined by its type and the objects it constrains (*e.g*. a parallelism constraint is fully defined by its type, parallelism, and reference to the objects that must be constrained to be parallel). A dimensional constraint, however, is defined by its type, distance angle or radius, and also a specification of a numerical value: distance value, radius value, or angle value. This specification is however not represented in the corresponding constraint edge or its associated data. Or it may be represented but not used for training, so that the function will only predict constraint types as further discussed hereinafter. For example, in the training dataset, if a constraint edge represents a distance constraint, it specifies a reference to the two objects constrained by that constraint and specifies the label corresponding to that constraint type but does not specify the actual value of the distance. This allows the function to learn to provide predictions of constraint types/labels, but then, if the constraint includes parameters with values to specify (like a distance), these values are settable by the user, or can be post-computed by the system using a suitable method (this is further discussed hereinafter).

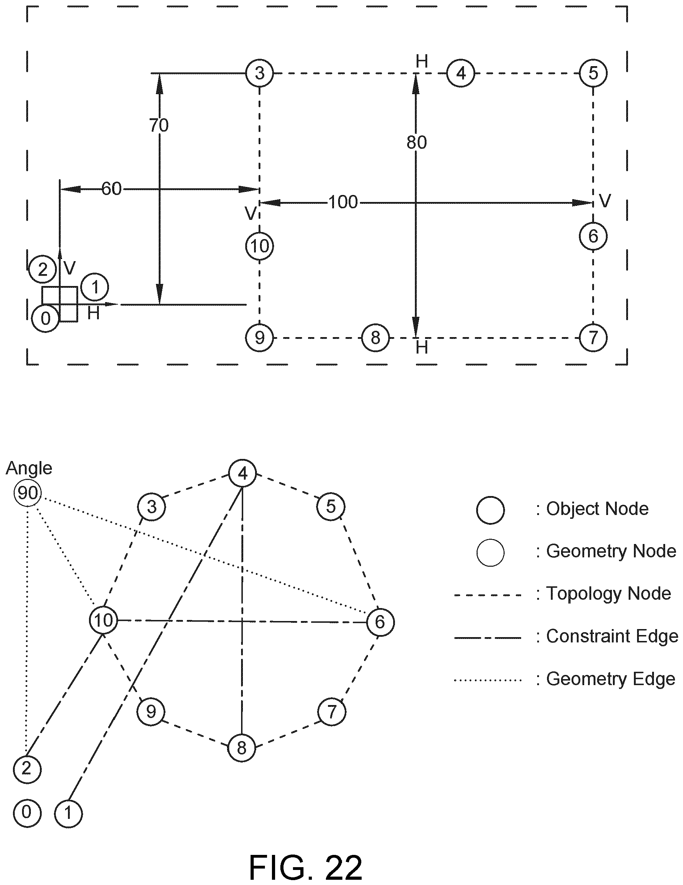

FIG. 22 shows an illustration of the various edges of an example of a graph of a training example.

Each training example may further comprise data specifying a set of couples of object nodes on which a constraint can be assigned. This data may comprise, for each such couple, a reference (*e.g*. ID or index) to the object nodes of the couple. In other words, the graph of the training example already comprises a set of couples of object nodes for which constraint edges already exist and are labels with constraint types, and also comprise these additional data that specify a set of couples of object nodes for which a constraint can potentially be assigned. This means that each training example comprises these additional data that specify the space of possible solutions, *i.e.* the set of couples of points for which it is possible to assign a constraint, and the ground truth data, which is the set of constraint edges which actually specifies the ground truth constraints of the sketch represented by the graph. This allows the function to learn between which geometries of a given sketch it can potentially assign a constraint, but between which geometries a constraint has actually been assigned in ground truth data. This allows the function to operate a selection of where to assign a constraint within the space of possible solutions in accordance with the ground truth data it has seen during training. As previously said, the choice of where to assign constraints on a 2D sketch is not unique and several possibilities exist. The function is thus trained to choose, among these possibilities, those corresponding to the ground truth data, *i.e.* those that would statistically be chosen by the expert users. The space of possible solutions may comprise couples of object nodes already connected by constraint edges, *i.e.* corresponding to the ground truth data, and other couples of nodes.

For each possible couple of object nodes of the graph of the training example, the couple may be excluded from the set of couples if:
- the object nodes both represent a same point;
- the object nodes both represent a same line;
- the object nodes both represent an external object;
- the object nodes both represent a reference object;
- the object nodes represent fixed objects; or
- one object node represents a reference object, and the other object node represent an external object.
In other words, the above list represents predefined exclusions from the space of possible solutions, because they correspond to impossible constraints.

Providing the training dataset may comprise forming the training dataset.

Forming the training dataset may comprise providing a set of 2D sketches, each representing at least a part of a respective mechanical part, to be represented by graphs forming training examples. These sketches may be retrieved from any (*e.g.* remote) database or memory or server where they have been stored further to their design. From those sketches, the data about the objects created and all the relations (topologies and constraints) between those objects may be retrieved. In implementations, the amount of gathered sketches allows to have a great data diversity in terms of: Sketch complexity, Constraint combinations, and User constraint pattern best practices. The set of 2D sketches, in implementations tested by the inventors, comprised about 70k sketches.

Forming the training dataset may then comprise reducing the set of 2D sketches by only keeping sketches which respect one or more of the following criteria (*e.g.* all of them):
∘ the sketch is well-defined;
∘ the sketch is satisfied;
∘ the sketch comprises at least a predefined number of geometries (*i.e*. the sketch comprises at least N geometries, with N predefined, for example N=13);
∘ the sketch comprises manifold profiles only (*i.e*. no geometry in the sketch is a non-manifold profile); and/or
∘ the sketch comprises at least one dimensional constraint (*e.g*. at least one constraint among: angle, distance and radius).

A sketch is well-defined when it does not comprise any degree of freedom left and if there is no redundancy in the set of constraints. A sketch is satisfied if all its constraints are satisfied, *i.e*. they coincide with the positions of the geometries. For example, a parallelism constraint is satisfied between two lines which are indeed parallel. "Satisfied" is thus synonymous with "resolved".

In the implementations where the set of 2D sketches comprises about 70k sketches, the reduction led to about 20k sketches.

Forming the training dataset may further comprise converting each 2D sketch of the reduced set into a TEXT file, converting each TEXT file into a CSV file, and converting each CSV file into a respective graph.

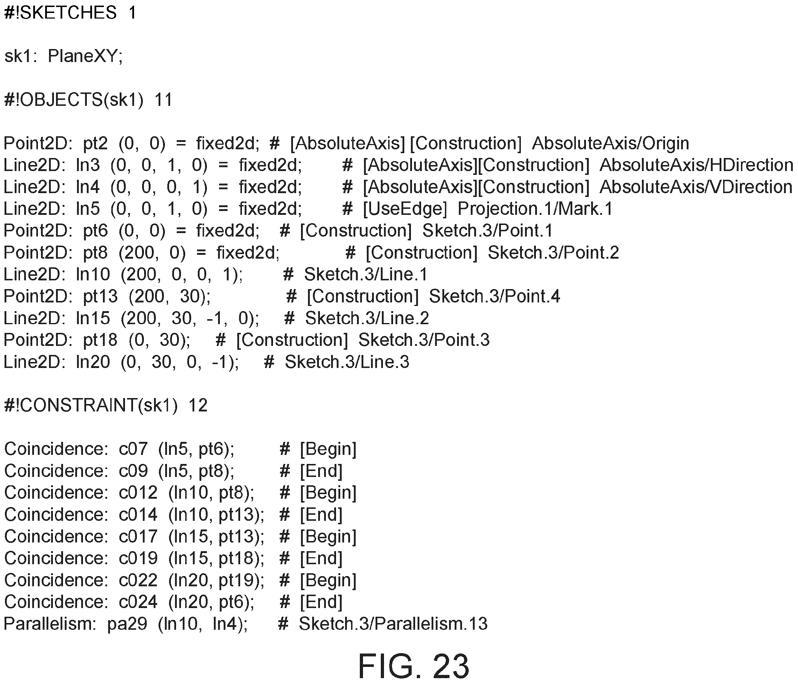

Converting a 2D sketch into a TEXT file may be done using any suitable method for reading the data specifications of the 2D sketch and then writing these specifications as a TEXT file. FIG. 23 shows a screenshot of an example of a TEXT file obtained from specifications of a constrained 2D sketch. As illustrated by the figure, inside each TEXT file, there are different sections:
- Objects: The different created geometries inside the extracted sketch;
- Constraints: The different applied constraints between the geometries mentioned in the "Objects" section;
- Options: Tolerance rules used for the creation of the sketch ;
There may be other sections stored inside the file, but they are not used for the training.

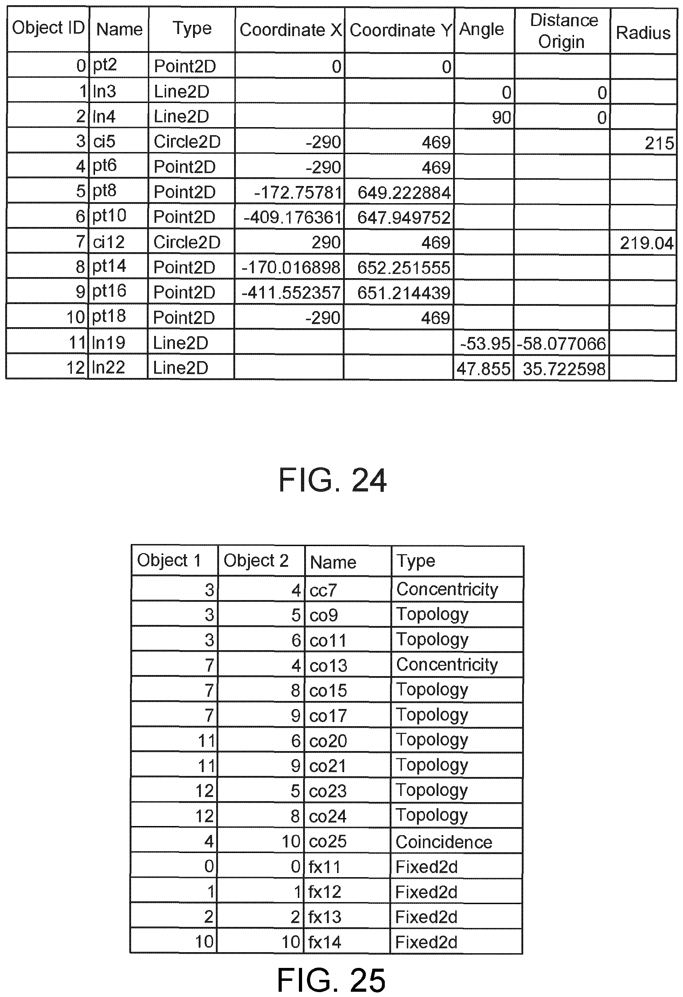

Converting each TEXT file into a CSV file may be done by any method that reads the TEXT file and determines a corresponding CSV file thereof, the CSV file listing the different objects with their different types and associated features (for example, an object of type Point has two coordinates) and the different relations between objects with their corresponding type of relation (either topologic or constraint). FIG. 24 shows a screenshot of the list of objects in an example of the CSV file (or rather its tabular representation) and FIG. 25 shows a screenshot of the list of relations for this example. The CSV file may in fact consist in two CSV files: one for the list of objects, and one for the list of relations.

Converting each CSV file into a respective graph may then be done by any suitable method that reads the CSV file and builds the corresponding graph, by reading the objects and relations in the CSV file and building the graph accordingly.

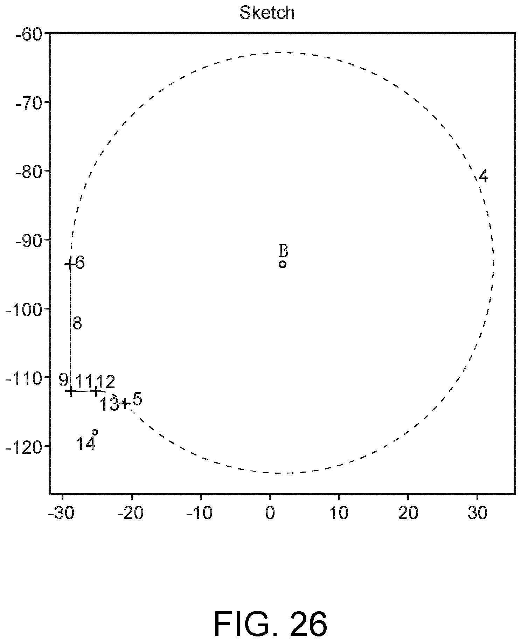

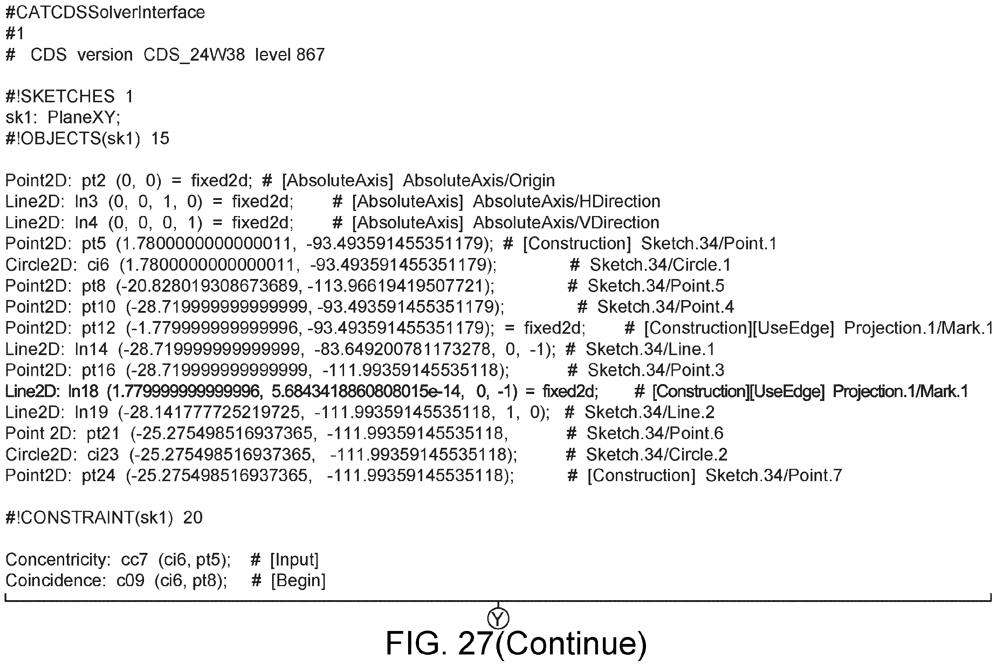

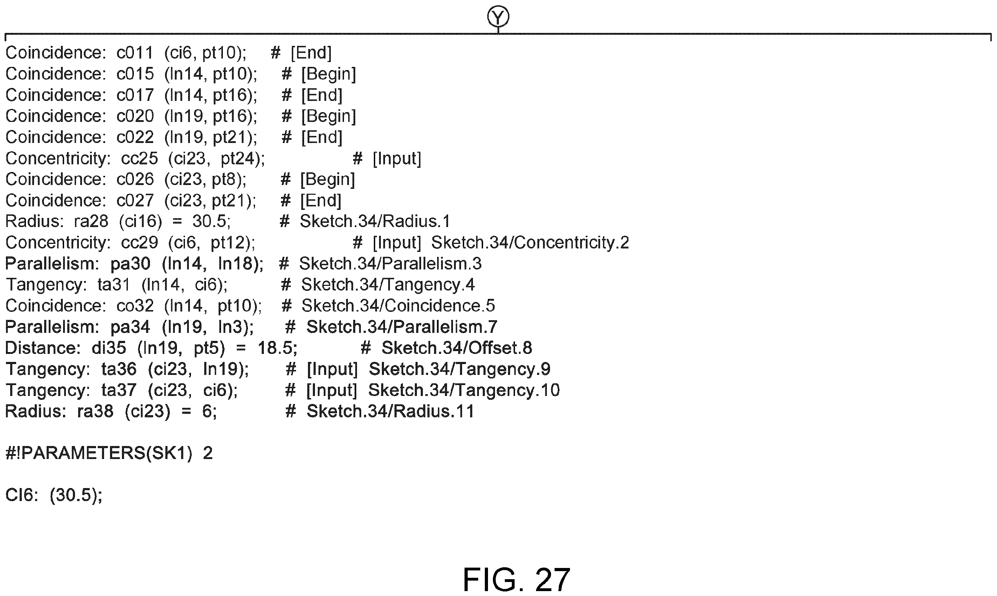

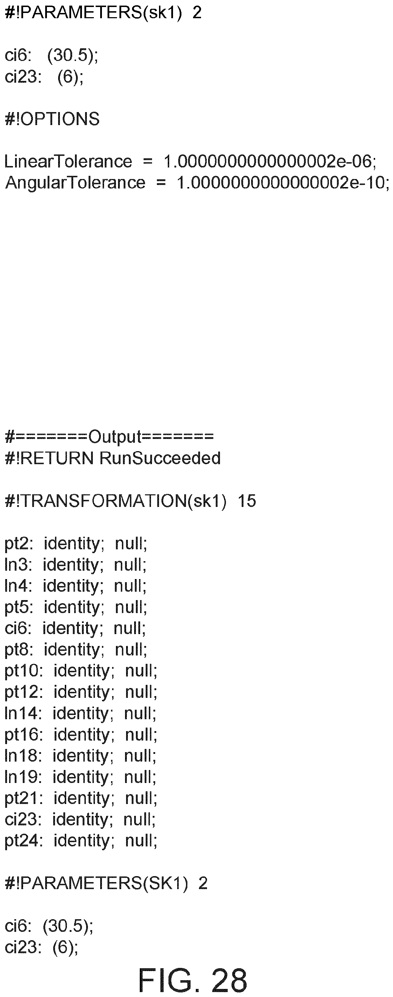

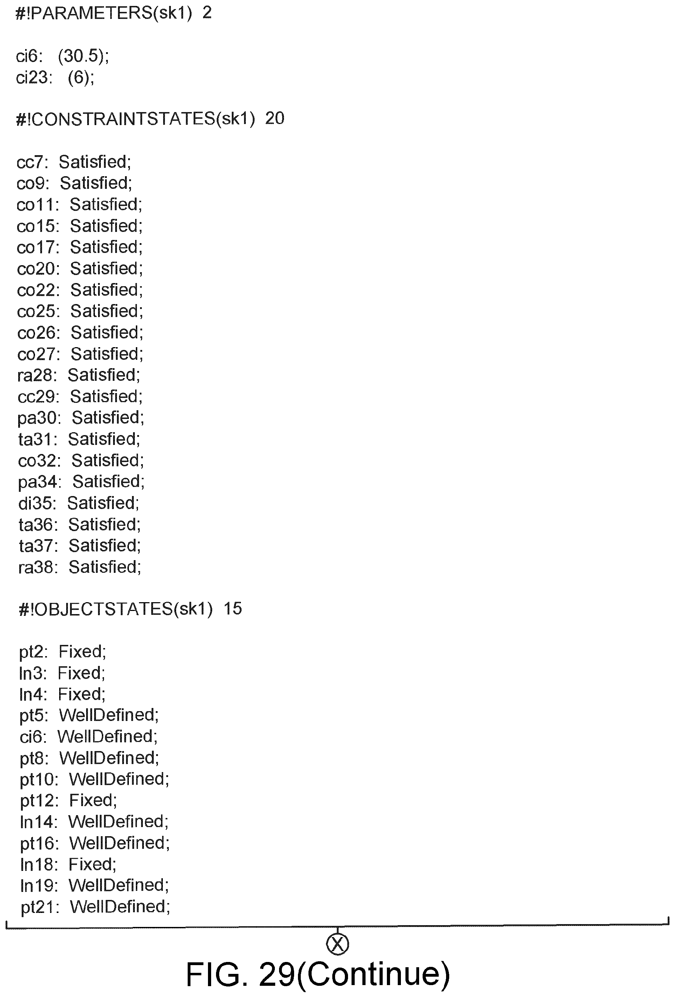

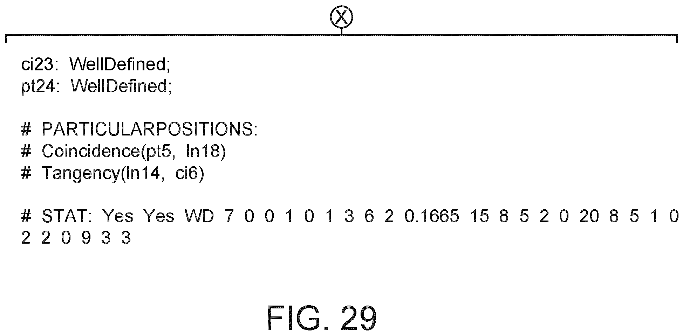

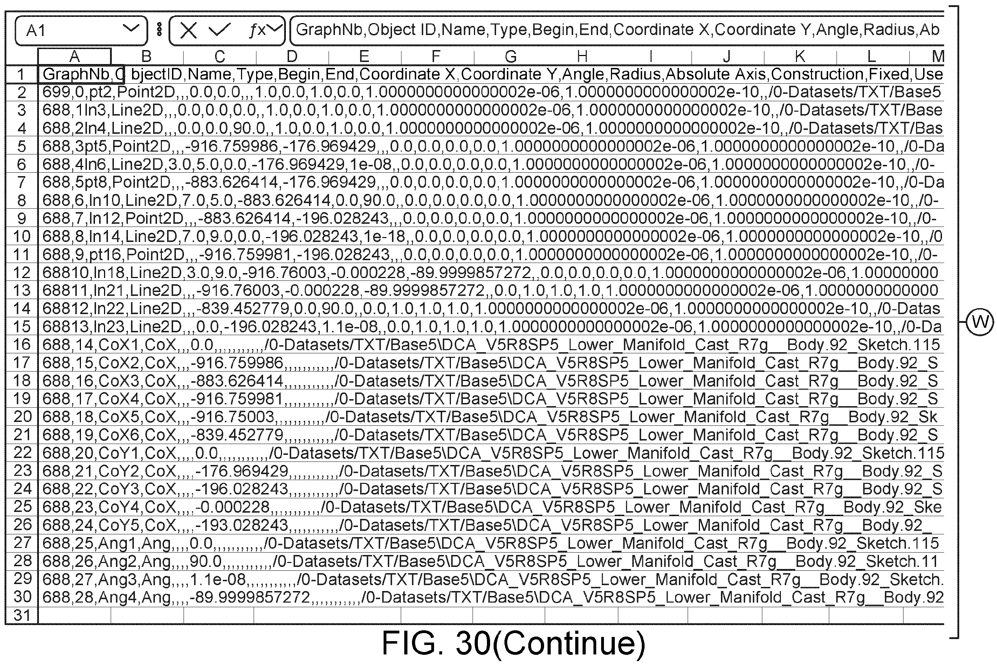

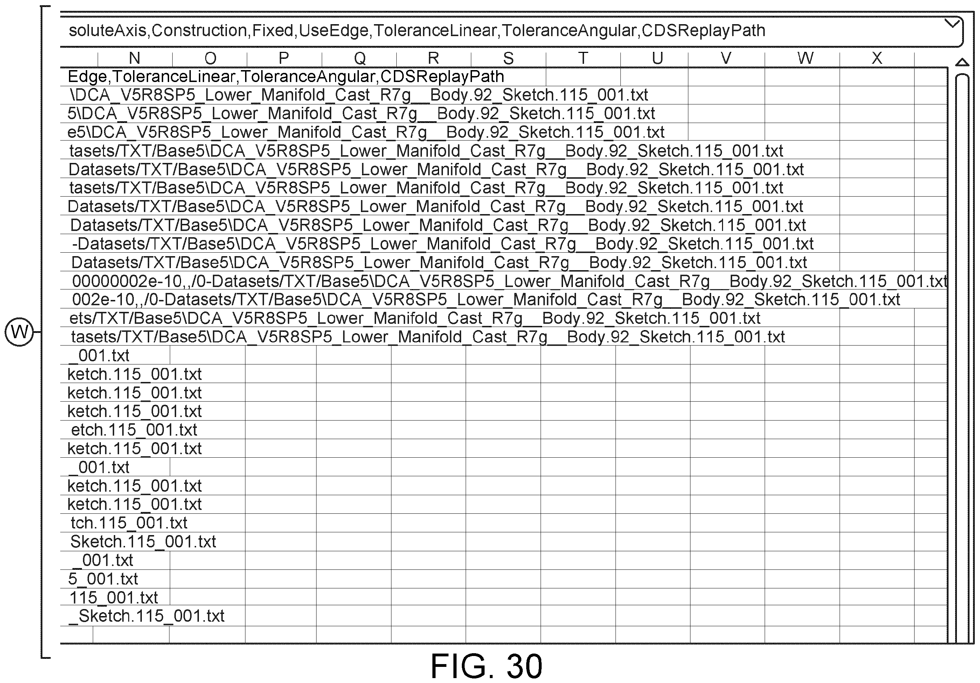

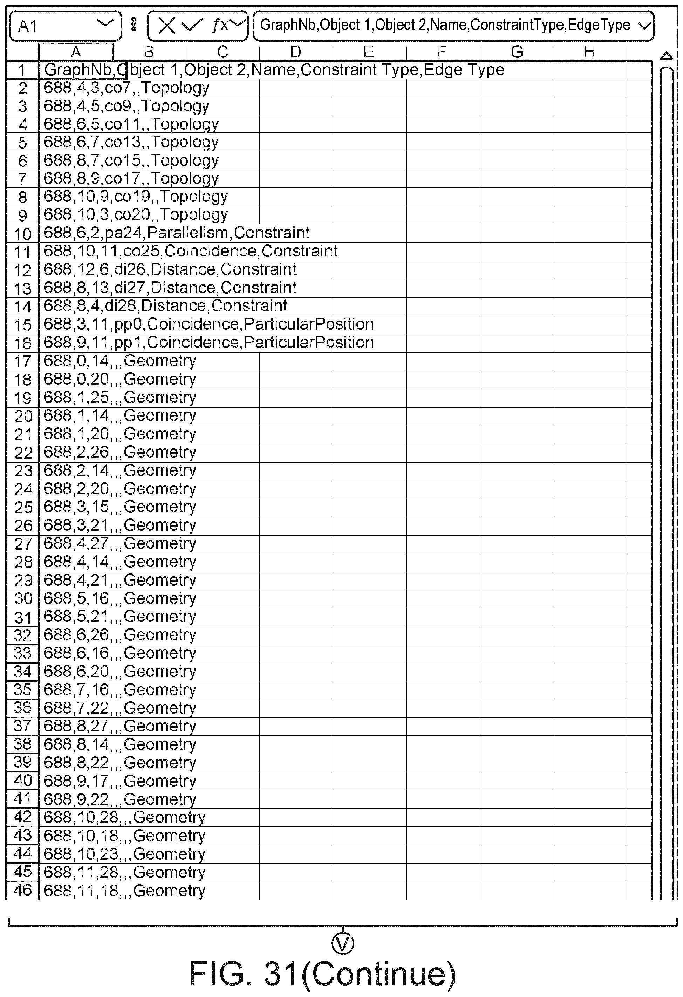

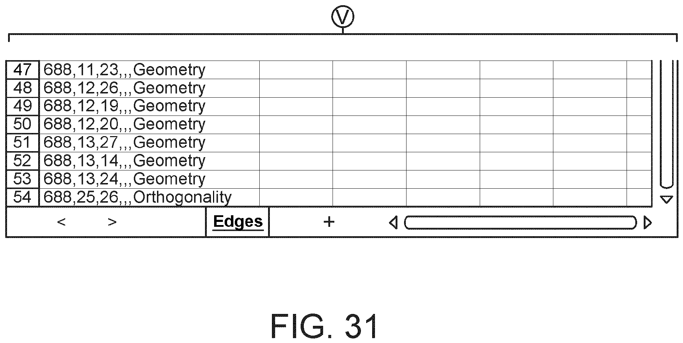

FIG. 26 shows an example of a 2D sketch usable as training example. FIG.s 27-29 shows successive screenshots of the TEXT file obtained for this sketch. FIG. 30 shows a screenshot of the corresponding CSV file for the list of objects, and FIG. 31 a screenshot of the corresponding CSV file for the list of relations/edges.

For each training example, forming the training example may also comprise, besides forming the graph representation as described above, adding to that graph, by any suitable method, the node and edges data discussed above, the data specifying a set of couples of object nodes on which a constraint can be assigned as discussed above, and the ground truth data, *i.e*. the labels of the constraint edges. As previously discussed, the constraint (and thus their labels) may consist of positive constraints (local constraints and dimensional constraints), and negative constraints (signifying absence of constraint). For at least some training examples, *e.g*. all of them or only a part thereof, the number of negative constraints may be too high relative to the number of positive constraints, which may risk the function to be bias to predict only negative constraint. To solve this problem, the labeling of each of such training examples may be modified by the method, by setting the number of constraint edges corresponding to the negative constraint to being equal to about twice (*e.g*. exactly twice, or twice plus or minus a predefined threshold) the number of constraint edges corresponding to the other constraints. This provides a satisfying balance between negative and positive constraints for the function to be well-trained to actually predict positive constraints but while being aware to predict a higher number of negative ones, to conform with practical reality.

The function is now further discussed.

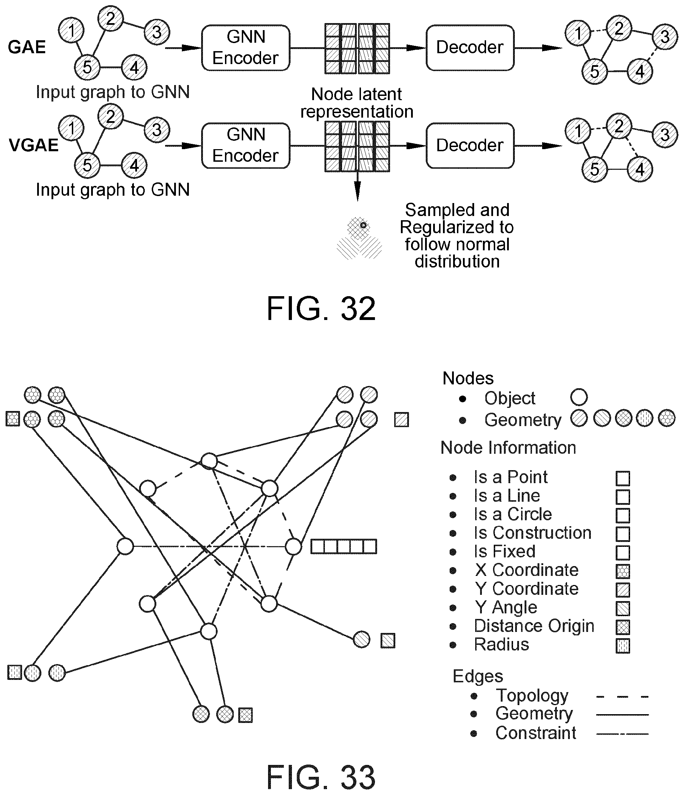

The function may include a Graph Neural Network, which may be simply referred to as "GNN". The GNN may also be referred to as "Graph auto-encoder" or "GAE" or yet "Variational Graph auto-encoder (VGAE)". A (variational) graph auto-encoder (GAE) is a type of neural network model specifically designed to learn meaningful representations of graph data. The difference between variational GNN and GNN is simply that the variational GNN provides latent representation sampled and regularized to follow a normal distribution. The GNN of the function may be a GAE or a VGAE. It consists of an encoder that captures the topological structure and node content of a graph, and a decoder that reconstructs the graph from the encoder learned latent representation. GAE's may be used for various tasks such as Node classification, Link prediction and Graph clustering. In the present disclosure, the GNN processes the graphs discussed herein which represent 2D sketches as a graph-oriented structure containing nodes (geometric objects) and edges (links between geometric objects). This graph is heterogeneous, since there are different types of nodes and different types of edges. The task of the GNN of the function of the present disclosure is link prediction, since it is trained to predict constraints labels for edges of an input graph. FIG. 32 illustrates the GAE and VGAE architectures.

The graph representation, an example of which is illustrated on FIG. 33, in the present disclosure is not usual compared to classic graph neural network work. This graph representation is heterogeneous (multiple node and edge types). The unique concept of this graph is due to the separation of the geometric information inside of specific geometry nodes instead of capturing the geometric information inside of object nodes. The inventors have chosen to utilize this graph representation for the following reasons:

### Message passing information:

The separation of geometric information outside of an object node can be done thanks to use of a GNN, due to the graph neural network message passing principle: Neural message passing is a crucial concept because it enables information exchange and aggregation among different nodes in a graph. In this heterogeneous graph representation framework of the present disclosure, a specific edge (or relationship) type "geometry" is dedicated for the message passing between objects and their geometry. With this principle, the graph neural network learns that if two objects are linked with the same geometries, there is a higher probability of constraint than if two nodes are not linked with any geometry edge.

### Tolerance rules:

The main reason of this unique graph representation is due to tolerance rules coming from the specific Sketch constraint use case. Any sketch in a Sketcher application may have tolerance rules not necessarily visible by a user. There are two types of tolerances: Linear and Angular. They both consist in defining at which level of precision (it may be for example 1mm, 1e-1 mm, 1e-2 mm, or 1e-3mm) it is considered that, for example, two lines are parallel, two points have the same coordinates, two circles have the same radius, etc. This notion is important and is captured with the graph representation of the present disclosure, since there are edges linking the different objects with the corresponding tolerances. This means that if two points are really close but not enough to consider linking the two points at the same coordinates, the graph will explicitly capture it.

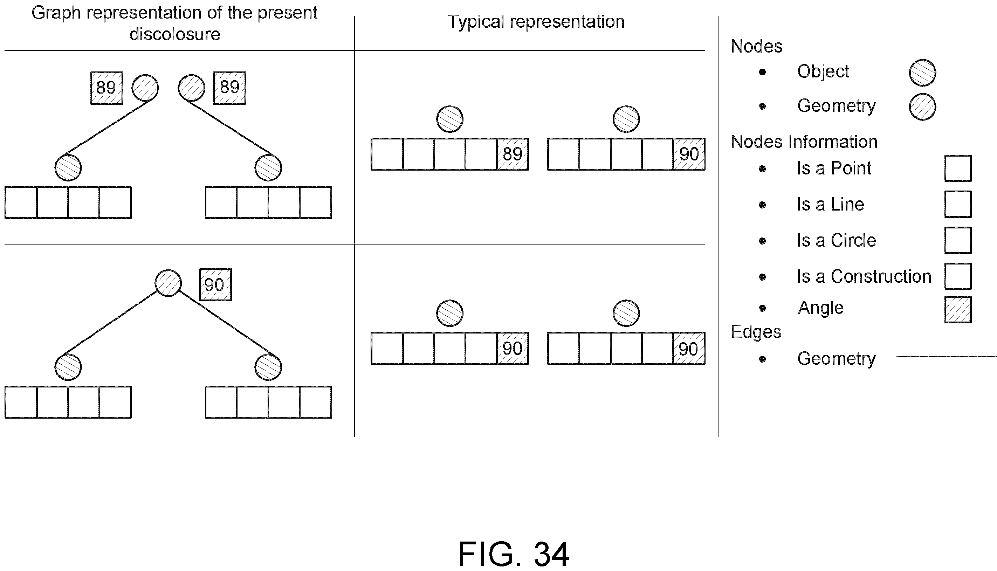

FIG. 34 shows a comparison of what would be a typical graph representation of a 2D sketch and the graph representation of the present disclosure. With the typical graph representation, the graph neural network would be more likely to make mistakes if the information is stored inside the object nodes. In the two examples shown in the figure, it can be seen that the typical graph representations are almost identical and only rely on numerical values inside the object nodes. On the other hand, the graph representation of the present disclosure implies a different graph representation for both examples.

### Consequences of Graph Neural Network Tolerance errors:

A wrong prediction on the tolerances may be a critical error. If the Graph Neural Network predicts a parallelism constraint on two line objects, it implies changing the user sketch geometry to match the proposed constraint.

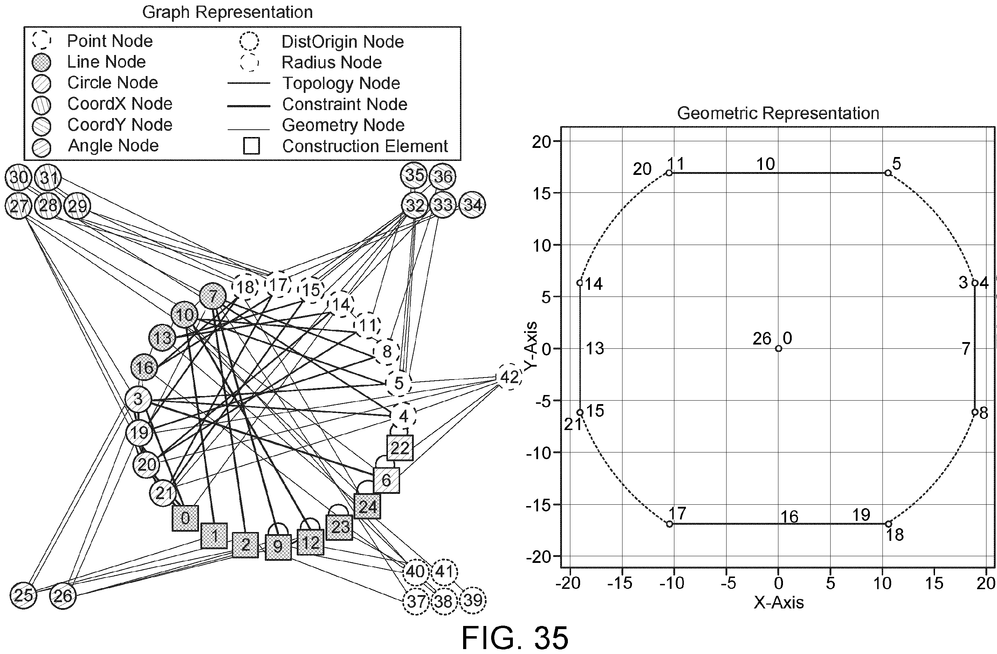

FIG. 35 shows yet another example of a 2D sketch geometric representation and the corresponding specific graph representation of the present disclosure.

The GNN may consist of a single GNN which is a GAE (graph autoencoder network) or may consist of a sequential GNN, the sequential GNN including a first Graph Neural Network for prediction of logical constraints and a second Graph Neural Network for prediction dimensional constraints based on the output of the first Graph Neural Network.

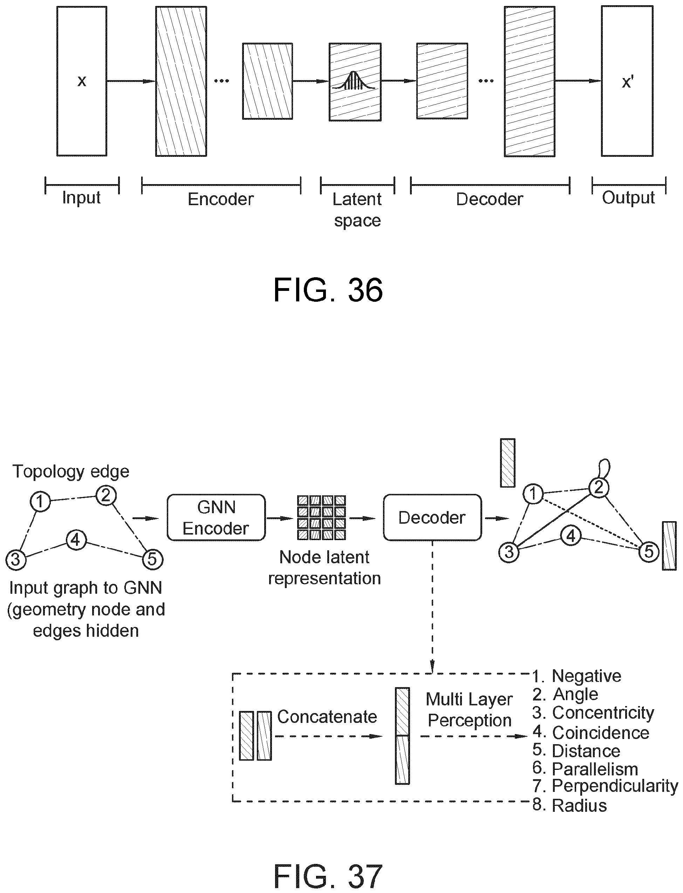

The single GNN architecture is illustrated by FIG. 36 (*Courtesy of Wikipedia, explaining GAE Architecture and introducing several concept (Encoder, Latent Space,*

*Decoder)*)*.* The Graph Auto-Encoder Network (GAE) leverages an input graph in order to represent it in a simplified representation called Node latent Representation. This is the task of the Encoder part of the model that embeds both node and edge information inside multiple graph layers to propagate the information. The decoder part takes the output of the encoder as input and its task is to reconstruct the graph by associating new links to the graph and classify them. In order to classify the edges, the decoder may be made of a Multi-Layer Perceptron (MLP), which is trained to classify the input edges. The output of the MLP may be a vector of probabilities for each of the pre-defined labels.

This architecture is illustrated by FIG. 37. The figure illustrates the input graph being consumed in the GNN encoder, then the derived vector from the latent space is decoded in two different step (concatenation of each predicted edges and a linear step (multi-layer Perceptron) to classify it based on the target. The MLP will retrieve the concatenated information of both nodes and will retrieve as output a fixed size of 8, where each bit corresponds to a target to predict. The exact number of graph layers, hyper parameter values, training details, and other Al model development characteristics are matter of implementation and may be subject to optimization. This model architecture is non-sequential, which means that the model makes predictions for every possible link at the same time. It does not capture any design pattern and considers every prediction equally and separately. This issue of respecting a constraint pattern logic is however addressed in the alternative where the GNN is a sequential GNN.

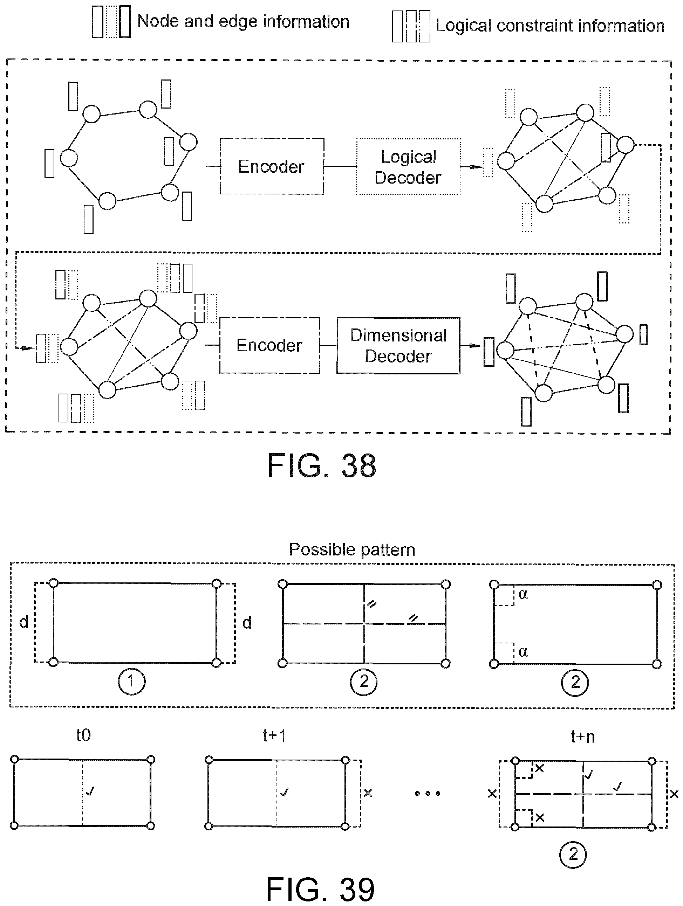

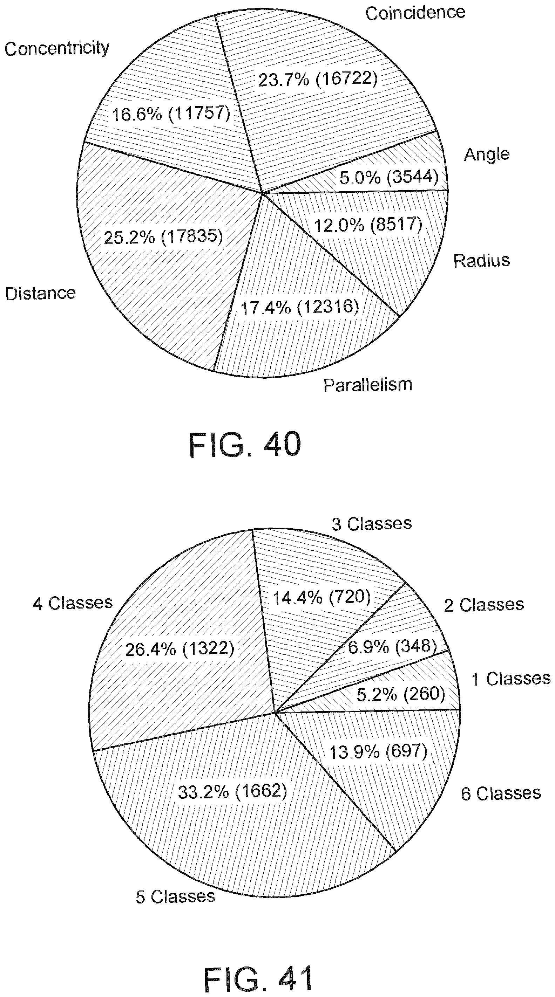

The sequential GNN uses multiple decoders in a sequential manner in order to perform the constraints prediction in a more natural and realistic manner. A first GNN makes first predictions on logical constraints, then a second GNN makes predictions on dimensional constraints. The Encoder-Decoder architecture of each GNN remains the same as the first presented, but this time, the first GNN passes the information of the predicted logical constraints to the second GNN (that will predict dimensional constraints). The second Encoder thus receives two types of information: the node and edge neighborhood information, and the location of the logical constraints predicted from the first decoder. The sequential GNN architecture is illustrated on FIG. 38. FIG. 39 illustrates the temporal/sequential approach enables by the sequential GNN, which is more meaningful since the process can capture what has already been predicted.

In any case, *i.e*. whether the GNN consists of a single GNN or a sequential GNN, the final output of the GNN may be, for each couple of nodes for which a constraint can be assigned (*e.g*. for each couple of nodes of the space of possible solutions discussed above), a vector of size N, N being the size of the predefined set of constraints, for example N=8 as discussed above. The vector may consist of N values each representing a probability (*e.g*. 0 or 1) that the couple of nodes can be assigned one respective constraint of the set (*e.g*. 0 meaning that this constraint cannot be assigned, 1 meaning that this constraint can be assigned). The probabilities may not necessarily be binary, *i.e*. 0 or 1, but may be comprised between 0 and 1, 1 indicating certainty, and 0 impossibility.

Training the function may consist in inputting to the function the training examples, as known per se from machine-learning, and quantifying a disparity between the sets of constraints outputted/predicted by the function (one set per constraint edge, or couple of nodes, on which the function predicts that a constraint should be assigned, for example one per couples of nodes of the previously-discussed set of possible solutions) and the labels of the training example constraint edges. For example, the function may, for each training example, predict a set of constraint of each couple of object nodes of the previously discussed set of couple of object nodes on which a constraint can be assigned (space of possible solutions), and the training quantifies a disparity between that prediction and the actual ground truth labels of the constraint edges of the training example. Each prediction may be vector of size N, N being the size of the predefined set of constraints, for example N=8 as discussed above. This quantification may be done by using a loss that captures that disparity (*e.g.* a MSE or any other suitable loss), as known *per se* from machine-learning. As known from machine-learning, the training consists in modifying the weights/parameters of the function (or its GNN) as long as the quantification (*e.g*. the loss) does not reach a satisfactory value, using an optimization.

Training results obtained by the inventors in implementations are now discussed. In these implementations, the inventors used a training dataset having the distribution of constraints illustrated by FIG.s 40 (distribution in terms of constraint types) and 41 (distribution in terms of number of different constraint types/classes present in the training examples). The following training parameters have been used:
- Number of epochs : 100
- Type of layers : GATConv, HeteroConv
- Number of layers : 2
- Latent space size : 128
- Batch size : 1
- Learning rate: 1e-3
- Execution time : 30 min (using one RTX A6000 GPU)
The following evaluation metrics have been used:
- Loss: 0.91
- Accuracy : 0.79
- Precision : 0.70
- Recall: 0.79
- F1 score : 0.71
- Mcc : 0.74

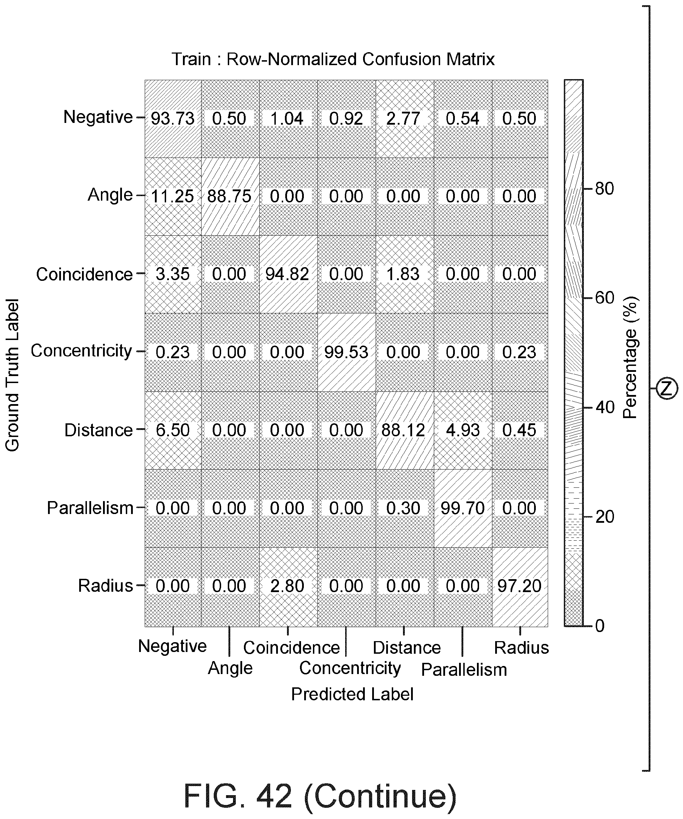

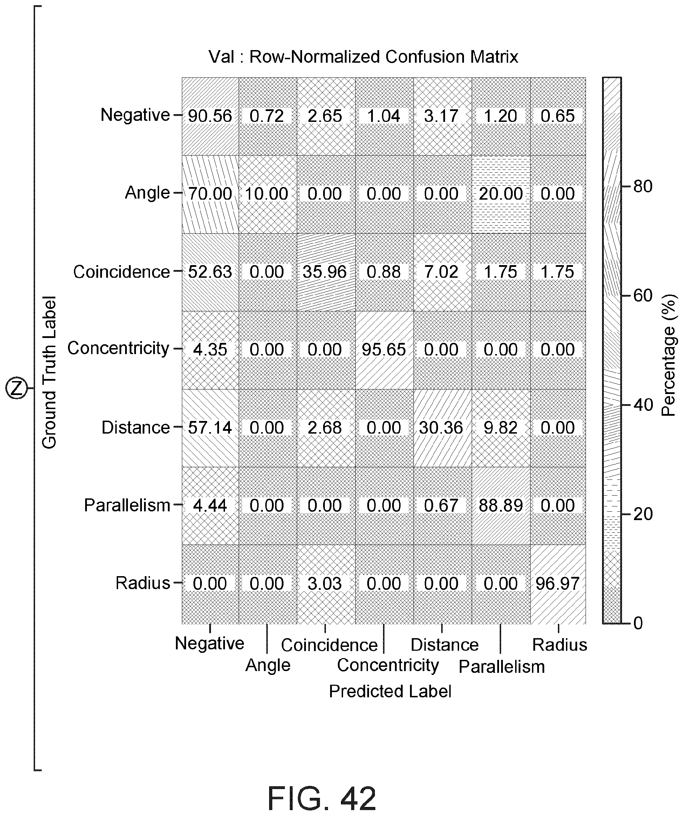

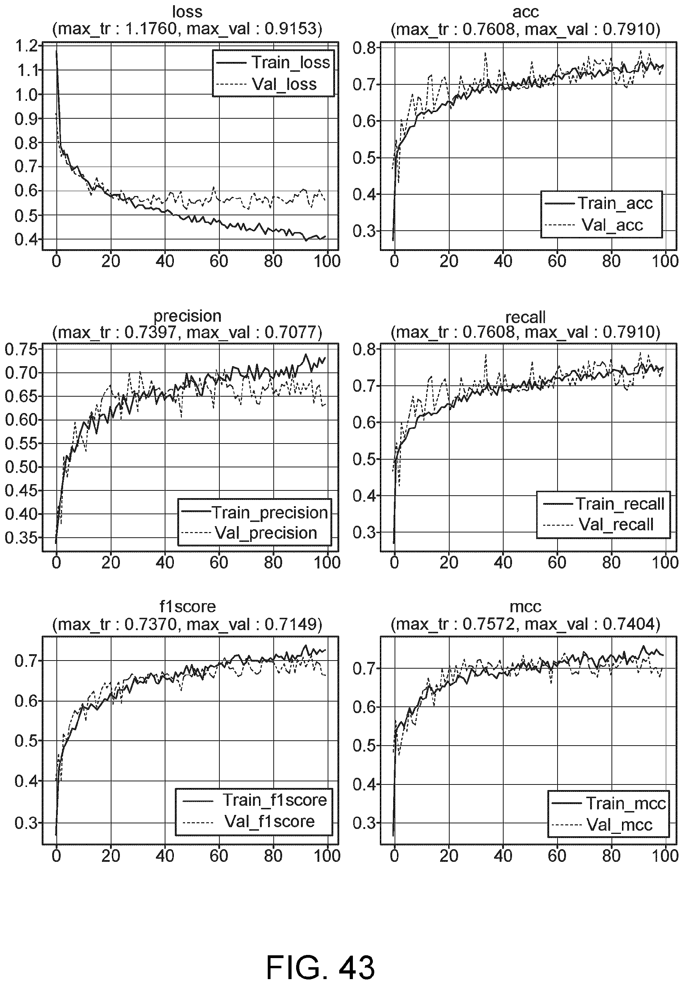

The results are illustrated by the confusion matrix of FIG. 42 and the graphs of FIG. 43.

It is further provided a function learnable according to the learning method, *i.e*. a function having the architecture and parameters/weights with values identical as the values that would have been set by the training according to the learning method. The function may for example be the function learnt according to the method, *i.e*. the function that directly results from the training according to the learning method, *i.e*. having parameters/weights values directly set by this training.

It is further provided a computer-implemented method of use of the function. The method of use comprises providing a graph representing a 2D sketch representing at least a portion of a mechanical part. The graph comprises object nodes each representing a geometric object of the sketch. The graph also comprises geometry nodes each representing a geometric property. The graph also comprises topological edges each connecting two object nodes and representing a topological link between the objects represented by the two nodes. The graph also comprises geometrical edges each connecting a geometry node to one object node. All the object nodes sharing the same geometric property are connected to the same geometry node, which represents that same geometric property. The method of use further comprises by applying the function, predicting constraint edges of the graph, thereby predicting a set of constraints for the 2D sketch, each constraint belonging to the predefined set of constraints.

Providing the graph may comprise forming the graph, or simply obtaining an already formed graph, *e.g*. from a (*e.g*. remote) memory or server or database. Forming the graph may comprise providing the 2D sketch and obtaining its graph representation, for example by performing the same steps as described above for obtaining the training examples (2D sketch to TEXT conversion, then TEXT to CSV conversion, then CSV to graph conversion), and obtaining the same node and edge data as described above for the training examples (except, of course, the constraint labels, since the function will predict them). In any case the graph is of the same type, in terms of structure and associated data, as the graphs seen during training.

Providing the graph may comprise providing the above-mentioned data specifying a set of couples of object nodes on which a constraint can be assigned, *i.e*. the space of solutions. This set of couples may be, by default, automatically provided as the set of all possible couples of object nodes in the graph, with exception, as for the training data, of the couples for which: the object nodes both represent a same point, the object nodes both represent a same line, the object nodes both represent an external object, the object nodes both represent a reference object, the object nodes represent fixed objects, or one object node represents a reference object and the other object node represent an external object. If the 2D sketch already comprises constraints, materialized by existing constraint edges with constraint labels in the graph (which is possible since the method of use may use the function to complete the constraints of an already partially constrained sketch), the couple of objects nodes linked by these edges may be excluded from the space of possible solutions, either automatically by the system, or manually (and thus possibly partially, if the user wishes so) by the user, for example by clicking on or touching the corresponding geometries in the sketch and triggering a dedicated command. Obtaining the graph from a 2D sketch as described above may be performed automatically by a module which implements these steps for obtaining the graph. The module may be a module of the function, in which case the module is not trained but only the neural network part (GNN) of the function is trained, and the function thus takes as input a 2D sketch which is then processed by this module to form a graph to be fed as input to the neural network part.

Applying the function then results in a list of predictions of constraints for the 2D sketch, *i.e*. a set of predictions of constraint edges each with a prediction of the most likely constraint for this edge within the predefined set. For example, the function may output a set of predicted constraints edges each with a vector of probabilities, each probability representing a probability that the edge is of a respective constraint type among the predefined set of constraints.

It is to be understood that the function, and thus the application step of the method of use, only predicts a set of constraints for the 2D sketch, *i.e*. a set of constraint types. However, the function does not necessarily predict the specifications of each constraint. For the logical constraints, the two are the same: by predicting a logical constraint between two geometries, the function inherently predicts the specifications of the constraint, *i.e*. how the constraint acts on the geometries, since this action is purely logical. For a dimensional constraint, however, the function only predicts the type of the constraint (*i.e*. angle, distance or radius), but not the specifications of the constraints, *i.e*. the actual angle value, distance value, or radius value. The method of use may however further comprise the application of a post-processing that comprises finding these values. This may be done by any suitable method, for example by using the tools already available in CAD systems for angle, distance or radius measurements for given geometries. The post processing may be implemented automatically by a post-processing module. This module may be part of the function, in which case the module is not trained and only the neural network part (GNN) of the function is trained. The module has thus the function of processing the output of this neural network part and to output the constrained sketch (*i.e*. with the numerical values of the dimensional constraints, and iso-constrained as discussed below).

The post-processing may further comprise another step consisting in making the 2D sketch iso-constrained. Indeed, the sketch is at this stage, *i.e*. after application of the function and possibly measurements of the specifications of the dimensional constraints, possible not iso-constrained. Iso-constraining is achieved by this further step of the post-processing. Making the sketch iso-constrained may comprise: the following steps:
- Extracting, from the predictions predicted by the function, a list of the predicted constraints of which probability is higher than the probability of the negative label, and a complementary list consisting of constraints of which probability of the negative label is the highest probability for the pair of objects linked by the constraint but is different from 1. Let us remind the reader that the function, for each pair of supports (geometric objects), predicts a list of probabilities associated with the constraint types, where the probability of a type is the probability of the constraint type for that pair of supports, and a probability for the negative label (probability that there is no constraint between the supports);
- using an automatic constraining algorithm (for example the one provided by CATIA) which transforms all constraints. The sketch will be considered iso-constrained if the Jacobian of the system has a maximum rank without redundancy or inconsistency;
- selecting the constraints with the highest probability in the first list to obtain a maximum rank and, if there are not enough constraints, selecting constraints in the second list to achieve the iso-constrained result.

FIG.s 44A to 47 illustrate the method of use.

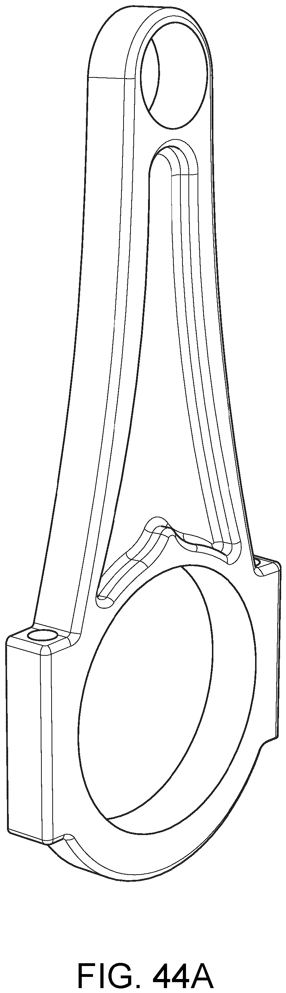

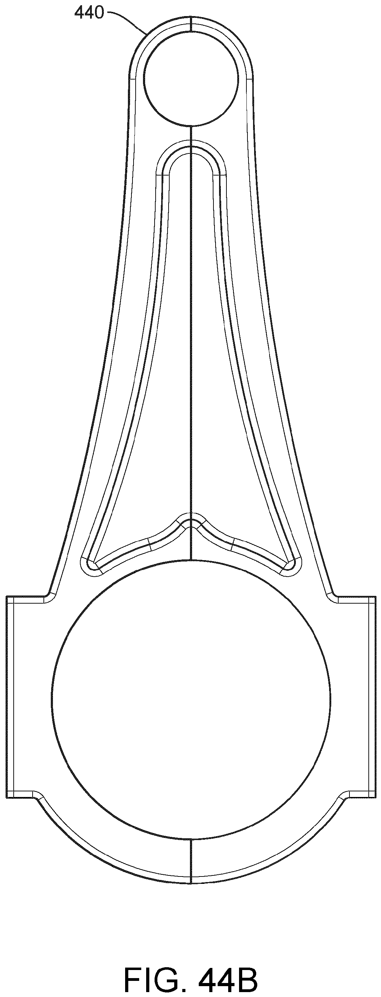

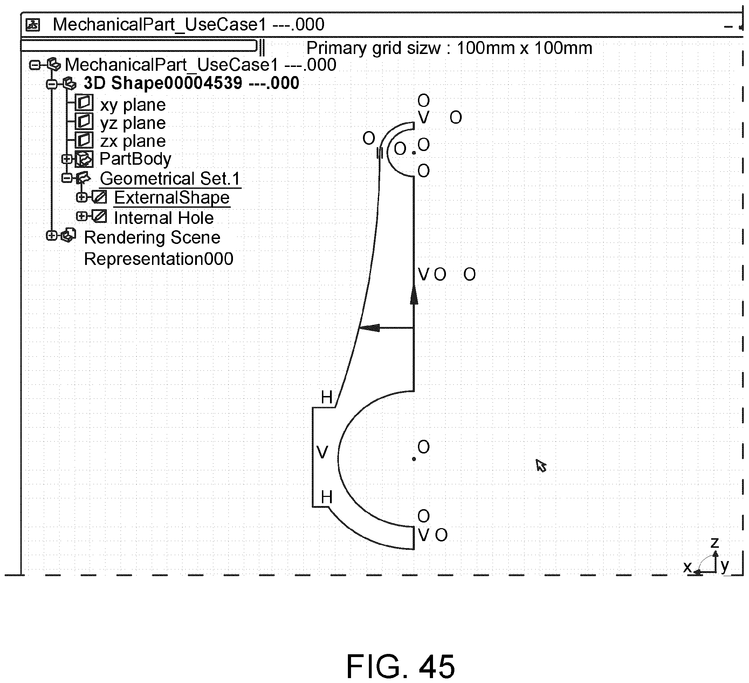

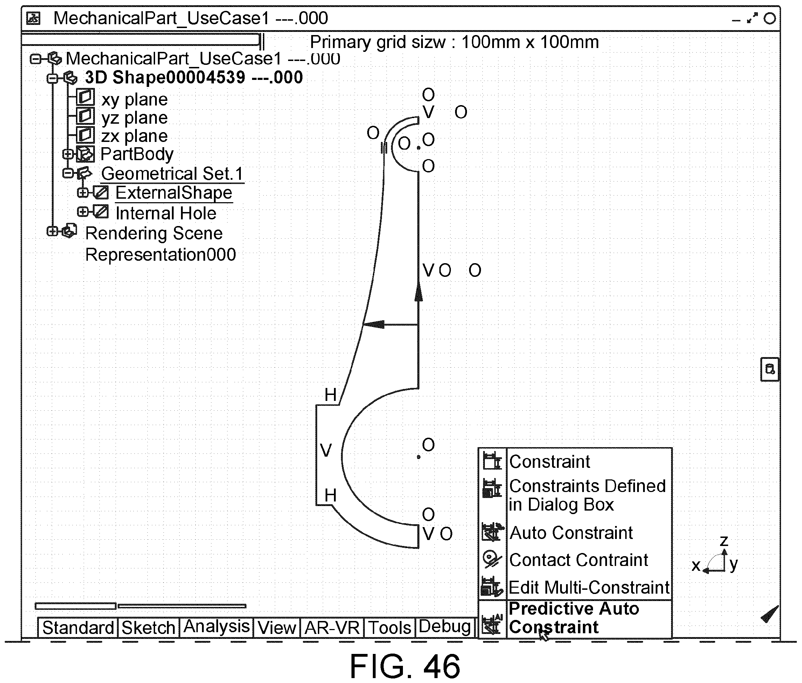

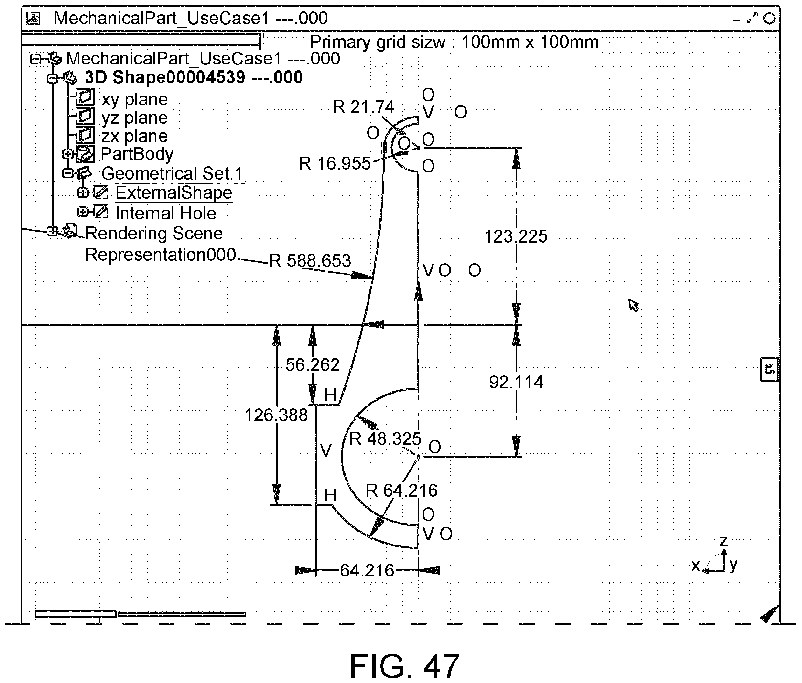

A 3D mechanical part is displayed on the screen of the CAD system used by the user, as shown by FIG. 44A. The user then graphically selects the contour 440, shown on FIG. 44B, which yields the 2D sketch shown on FIG. 45 (showing a screenshot of the CAD software performing the method). Then, on FIG. 46, the user selects a command "Predictive Auto-constraint" which triggers the method of use: automatically as a background process, the method of use provides the graph of the sketch (for example by application of a dedicated module as explained above), applies the neural network part of the function to predict the constraints, and the post-processing (for example by application of a dedicated module as explained above). Within a few seconds, the result is displayed to the user as shown on FIG. 47.

The method and the method of use may be implemented in a same computer-implemented process, which comprises performing the method and then the method of use. This process, or the method of use, may be integrated into a design and/or manufacturing process which may comprise:
- performing the process or the method of use for a given 2D sketch representing at least a part of a mechanical part, thereby iso-constraining the sketch;
- using the iso-constrained sketch for manufacturing the mechanical part based on the constraints.

Using the iso-constrained sketch for manufacturing the mechanical part may comprise determining manufacturing instructions (*e.g*. in the form of data specifying CAM specifications, for example stored as a CAM file or as CAM specifications stored as distributed data) based on the constraints, *e.g*. manufacturing instructions to command a manufacturing tool to manufacture the part while respecting the constraints. The constraints may thus directly be translated (*e.g*. with a to-CAM conversion process, as known in CAD) into data specifying a path of the tool (stored either in a CAM file or as distributed CAM data). For example, if the 2D sketch represents a 2D part, the constraints may directly be translated into data specifying a machining, laser-cutting or water-jet cutting path, the data being suitable to be inputted to a tool performing machining, laser-cutting or water-jet cutting so that the tool perform the machining process according to the path (machining, laser-cutting or water-jet cutting). Using the sketch for manufacturing the part may further comprise performing the physical manufacturing, *e.g*. by inputting to a tool the data specifying the manufacturing path.

Alternatively or additionally to the above described further use of manufacturing, the 2D sketch input to the method of use, of which graph the function is applied, may stem from a scan of the real-world mechanical part, or any other suitable physical measurement of the geometry of the part. In this case, the method processes the scan/physical measurement to obtain the constraints.

"Designing a manufacturing product/mechanical part/mechanical product" designates any action or series of actions which is at least a part of a process of elaborating a modeled object (3D or 2D) of the manufacturing product/mechanical part/mechanical product. The method of use may form such a process or may form at least a part of the process as discussed above.

The method thus generally manipulates modeled objects, *i.e*. the 2D sketches or the 3D models from which they may stem. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (*e.g*. a CAD system or a CAD software), it is additionally meant any system, software or hardware, adapted at least for designing a modeled object on the basis of a graphical representation of the modeled object and/or on a structured representation thereof (*e.g*. a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts. The specifications (also referred to as "CAD specifications) of a CAD model may be stored in a CAD file as explained above, but may also be stored as distributed CAD data on one or more storage, *i.e*. on a cloud environment.

In the context of CAD, a modeled object may typically be a 2D or 3D modeled object, e.g. representing a product such as a part or an assembly of parts, or possibly an assembly of products. The 2D or 3D modeled object may be a manufacturing product, *i.e*. a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA^{®}. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA^{®}. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict *e.g*. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA^{®}.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:
- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 48 shows an example of the system, wherein the system is a client computer system, *e.g*. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for machine-learning a function configured to predict constraints for a 2D sketch representing at least a portion of a mechanical part, the method comprising:
- providing a training dataset of training examples, each training example comprising a graph representing a 2D sketch representing at least a portion of a mechanical part, the graph comprising:
∘ object nodes each representing a geometric object of the sketch;
o geometry nodes each representing a geometric property;
o topological edges each connecting two object nodes and representing a topological link between the objects represented by the two nodes;
∘ geometrical edges each connecting a geometry node to one object node, object nodes sharing the same geometric property being connected to a same geometry node representing the geometric property; and
∘ constraint edges each connecting two object nodes and representing a constraint between the objects represented by the two object nodes, each constraint edge being labeled with a respective label of a predefined set of constraint labels, each label of the set representing a respective constraint of a predefined set of constraints; and
- training the function based on the training dataset, the function being trained to take as input a graph representing a 2D sketch representing at least a portion of a mechanical part and to output a set of constraints each of a constraint edge of the graph, each constraint of the set belonging to the predefined set of constraints.

2. The method of claim 1, wherein each training example further comprises data specifying a set of couples of object nodes on which a constraint can be assigned.

3. The method of claim 2, wherein for each possible couple of object nodes of the graph of the training example, the couple is excluded from the set of couples if:
- the object nodes both represent a same point;
- the object nodes both represent a same line;
- the object nodes both represent an external object;
- the object nodes both represent a reference object;
- the object nodes represent fixed objects; or
- one object node represents a reference object and the other object node represent an external object.

4. The method of any one of claims 1 to 3, wherein providing the training dataset comprises forming the training dataset, including:
- providing a set of 2D sketches, each representing at least a part of a respective mechanical part, to be represented by graphs forming training examples; and
- reducing the set of 2D sketches by only keeping sketches which respect one or more of the following criteria:
∘ the sketch is well-defined;
∘ the sketch is satisfied;
o the sketch comprises at least a predefined number of geometries;
o the sketch comprises manifold profiles only; and/or
o the sketch comprises at least one dimensional constraint.

5. The method of claim 4, wherein the forming the training dataset further comprises:
- converting each 2D sketch of the reduced set into a TEXT file;
- converting each TEXT file into a CSV file;
- converting each CSV file into a respective graph.

6. The method of any one of claims 1 to 5, wherein the function includes a Graph Neural Network (GNN).

7. The method of claim 6, wherein the Graph Neural Network is a sequential Graph Neural Network including a first Graph Neural Network for prediction of logical constraints and a second Graph Neural Network for prediction dimensional constraints based on the output of the first Graph Neural Network.

8. The method of any one of claims 1 to 7, wherein the predefined set of constraints includes:
- local constraints, consisting of: coincidence, parallelism, perpendicularity, and concentricity;
- dimensional constraints, consisting of: angle, distance, and radius; and
- negative constraint signifying the absence of constraints.

9. The method of claim 8, wherein during, for at least some of the training samples, the method comprises setting the number of constraint edges corresponding to the negative constraint to being equal to about twice the number of constraint edges corresponding to the other constraints.

10. A function learnable according to the method of any one of claims 1 to 9.

11. A computer-implemented method of use of a function according to claim 10, comprising:
- providing a graph representing a 2D sketch representing at least a portion of a mechanical part, the graph comprising:
∘ object nodes each representing a geometric object of the sketch;
∘ geometry nodes each representing a geometric property;
∘ topological edges each connecting two object nodes and representing a topological link between the objects represented by the two nodes;
∘ geometrical edges each connecting a geometry node to one object node, object nodes sharing the same geometric property being connected to a same geometry node representing the geometric property; and
- by applying the function, predicting constraint edges of the graph, thereby predicting a set of constraints for the 2D sketch, each constraint belonging to the predefined set of constraints.

12. The method of claim 11, wherein the method further comprises applying a post-processing to make the 2D sketch iso-constrained.

13. A computer program comprising instructions which, when executed by a computer system, cause the system to perform the method of any one of claims 1 to 12.

14. A computer-readable data storage medium having recorded thereon the computer program of claim 13 and/or the function of claim 10.

15. A computer system comprising a processor coupled to a memory, the memory having recorded thereon the computer program of claim 13 and/or the function of claim 10.
